# EUROPÄISCHE PATENTANMELDUNG

(11) **EP 2 145 538 A1**
(43) Veröffentlichungstag der Anmeldung: **20.01.2010**
(21) Anmeldenummer: 08160456.3
(22) Anmeldetag: 15.07.2008
(51) Int. Cl.: A01N 43/16, A01N 43/40, A01N 59/16, A01P 3/00

(54) **Pflanzen- und Materialschutzmittel**

(71) Anmelder: Georg-August-Universität Göttingen Stiftung Öffentlichen Rechts, 37073 Göttingen (DE)
(72) Erfinder: Ngwenya, Tedson, 37073 Göttingen (DE); Wolf, Gerhard, 37077 Göttingen (DE)
(74) Vertreter: Wichmann, Hendrik

(57) **Zusammenfassung**

Die Erfindung betrifft die Verwendung von Verbindungen der Formel A, B, oder C als Mittel zur Bekämpfung von Pilzen oder anderen Mikroorganismen, insbesondere im Rahmen des Pflanzen- und Materialschutzes.

## Beschreibung

Die vorliegende Erfindung betrifft die Verwendung von Inhibitoren von Enzymen, insbesondere Hydrolasen als Mittel für die Bekämpfung von insbesondere schädlichen, bzw. phytopathogenen Pilzen und anderen Mikroorganismen, insbesondere in oder auf Pflanzen.

Im Rahmen von Bekämpfungsstrategien phytopathogener Pilze als den wichtigsten Erregern von Pflanzenkrankheiten werden bis heute fast ausschließlich Fungizide eingesetzt, d.h. Substanzen, die meist über eine systemische Ausbreitung in der Pflanze den Pilz durch Blockierung essentieller intrazellulärer Stoffwechselwege abtöten.

Die Resistenzbildung auf der Seite der Pathogenen und die zunehmende Schwierigkeit, fungizide Substanzen mit neuartigen Wirkmechanismen zu finden zwingen über andere, d.h. neue Wege der Bekämpfung nachzudenken.

Ein interessanter Weg zur Pilzbekämpfung ist der Einsatz von Stoffen, welche Enzyme inhibieren, die für die Penetration des Erregers notwendig sind und möglichst spezifisch für Mikroorganismen, insbesondere für Pilze sind. Überraschenderweise ist der Weg einer gezielten systematischen Suche nach solchen Enzyminhibitoren im Bereich des Pflanzenschutzes bisher nicht oder nur selten beschritten worden. Ein frühes Beispiel sind die Arbeiten von GROSSMANN, der sich in den 1960iger Jahren mit zellwandabbauenden Enzymen phytopathogener Pilze beschäftigt hatte. Er konzentrierte sich auf die Suche nach Inhibitoren pektolytischer Enzyme, die er in der Gruppe der Polyphenole, Anthrachonone und Detergentien fand. Da es sich hierbei aber um sehr breit wirkende Enzyminhibitoren handelte, die eine Reihe von negativen Nebeneffekten aufwiesen, wurde diese Richtung aus diesem Grunde nicht weiter verfolgt.

Ein klassisches frühes Beispiel für die Inhibition von Schlüsselenzymen des intrazellulären Pilzstoffwechsels ist die Antibiotika-Gruppe der Nikkomycine, die als Inhibitoren der pilzspezifischen Chitinsynthetase-Inhibitoren gefunden wurden. Im Bereich der Pflanzenkrankheitserreger und -schädlinge sind generell ihre extrazellulären, zellwanddegradierenden Enzyme von entscheidender Bedeutung. Hierzu gehören Cutinasen, Pektinasen, Cellulasen, β-1,3-Glucanasen, Xylanasen u.a.. Ihnen kommt eine zentrale Funktion beim Eindringen und der Ausbreitung in der Pflanze zu, so dass sie deswegen als wichtige Pathogenitätsfaktoren angesehen werden (REIGNAULT PH., VALETTE-C:O: und BOCCARA M:, 2008). Auch nach Hemmstoffen dieser Enzymgruppe als potenziellen Resistenzfaktoren von Pflanzen wird mittlerweile intensiv gesucht.

Pilze der Gattung *Fusarium* insbesondere die Arten *F. graminearum* und *F. culmorum* spielen nicht nur wegen der von ihnen ausgehenden Kontamination von Nahrungsmitteln mit Mykotoxinen, eine wichtige Rolle, sondern können auch zu erheblichen Ertragseinbußen führen, was häufig unbeachtet bleibt. Nicht zuletzt können sie auch über die Mehlqualität die Backqualität negativ beeinflussen. Typisch für einen stärkeren Befall des Erntegutes ist ein relativ hoher Anteil kleiner und geschrumpfter Körner, die allerdings im Erntegut durch Aussieben nicht so stark in Erscheinung treten. Ursache für die Bildung geschrumpfter Körner ist der Abbau des Mehlkörpers d.h. der Stärke durch pilzliche Amylasen, mit denen sich der Pilz eine wichtige C-Quelle erschließt. Betrachtet man den Infektionsverlauf auf der Ähre von den Spelzen über das Einwachsen in die Spindel bis zur Besiedlung des Korns, so wird deutlich, dass polysaccharidabbauende Enzyme wie z.B. Cellulasen und Amylasen eine essentielle Rolle spielen. Generell können die extrazellulären polysaccharidabbauenden Enzyme als Schlüsselenzyme der Pathogenese angesehen werden. Dies kommt auch in der engen Beziehung zwischen Pilzbiomasse in der Pflanze und Schlüsselenzymen wie z.B. Cellulase, Xylanase und Protease zum Ausdruck (AFSHARI, 1992).

Im Bereich der Humanmedizin spielen Enzym-Inhibitoren seit längerem eine entscheidende Rolle in der Therapie wichtiger Krankheiten. Der Erfolg beruht hier auf der Suche und dem Auffinden spezifischer Inhibitoren wichtiger Schlüsselenzyme.

Der Amylase-Inhibitor Acarbose ist als Pharmazeutikum für die Behandlung von Diabetes des Typ 2 bekannt. Acarbose reduziert hierbei die postprandiale Hyperglykämie durch das Verzögern der Absorption von Kohlenhydraten im Dünndarm. Ferner führt Acarbose in Kombination mit anderen anti-Diabetes Wirkstoffen zu einer verbesserten glykemischen Kontrolle. Neuere Studien zeigten zudem, dass eine Acarbose-Therapie signifikant das Risiko eines cardiovaskulären Vorfalles in gefährdeten Personen mit Glukose-Intoleranz reduzieren kann. (BREUER, 2003; WEHMEIER, 2004).

Der Amylase-Inhibitor Miglitol ist ebenfalls in der Lage, den Glukosespiegel im Plasma von nüchternen oder postprandialen Typ 2 Diabetes Patienten zu reduzieren. Miglitol wird insbesondere als förderlich in der Behandlung von älteren Patienten und solchen mit hepatischen oder leichten bis moderaten Beeinträchtigungen der Niere, in denen andere antidiabetische Wirkstoffe kontraindiziert sind oder mit Vorsicht verwendet werden müssen, beschrieben. (SCOTT & SPENCER, 2000)

Palladium Komplexe, wie z.B. Natrium-hexachloro-palladat (IV) tetrahydrat, haben gezeigt, Cellobiohydrolase I (CBH I) und Endoglukanase II (EG II), zwei Cellulasen, die durch Trichoderma reesei erzeugt werden, in starkem Maße zu inhibieren. Die Inhibition von Cellulase (Avicelase) und beta-Glukosidase Aktivitäten ist ebenfalls beschrieben. (SHULTZ, 1995)

Auf Grund der laufend sich erhöhenden ökologischen und ökonomischen Anforderungen an moderne Pflanzenschutzmittel, insbesondere in Bezug auf Toxizität, Selektivität, Probleme mit Resistenzen und günstige Herstellbarkeit, besteht die ständige Aufgabe, neue antifungale Stoffe zu entwickeln, die zumindest in Teilbereichen Vorteile gegenüber den bekannten aufweisen.

### ZUSAMMENFASSUNG DER ERFINDUNG

Die vorliegende Erfindung betrifft Verwendung einer Verbindung der Formel A oder der Formel C oder von agrochemischen Salzen davon als Mittel zur Bekämpfung von Pilzen oder anderen Mikroorganismen.

Ferner betrifft die Erfindung die Verwendung einer Verbindung der Formel B oder von agrochemischen Salzen davon als Mittel zur Bekämpfung von Pilzen oder anderen Mikroorganismen.

Ferner betrifft die vorliegende Erfindung Mittel zur Bekämpfung von Pilzen oder anderen Mikroorganismen in oder auf Pflanzen, Saatgut und/oder Material, insbesondere Holz, enthaltend mindestens eine der Verbindungen der Formel A oder C und agrochemisch oder im Materialschutz übliche Hilfs- und/ oder Zusatzstoffe.

Ferner betrifft die Erfindung Mittel zur Bekämpfung von Pilzen oder anderen Mikroorganismen in oder auf Pflanzen und/oder Material, insbesondere Holz, enthaltend mindestens eine der Verbindungen der Formel B und agrochemisch oder im Materialschutz übliche Hilfs- und/ oder Zusatzstoffe.

Ferner betrifft die Erfindung Saatgut, behandelt mit mindestens einer Verbindung der Formel A oder C.

Ferner betrifft die Erfindung ein Verfahren zum Screenen nach Pilz- oder Mikroorganismen-Befall inhibierenden Substanzen, umfassend die folgenden Schritte:
a) Bereitstellen einer Kandidatensubstanz, die in der Lage ist, ein Enzym zu inhibieren, das an dem Eindringen oder Ausbreiten des Pilzes oder des Mikroorganismus in die Pflanze beteiligt ist, und
b) Bestimmen, ob die Substanz in der Lage ist, Pilz- oder Mikroorganismus-Befall von Pflanzen zu inhibieren.

### DETAILLIERTE BESCHREIBUNG DER ERFINDUNG

Ein erster Aspekt der vorliegenden Erfindung betrifft die Verwendung einer Verbindung der Formel A oder der Formel C oder von agrochemischen Salzen davon als Mittel zur Bekämpfung von Pilzen oder anderen Mikroorganismen.

Bei der Verbindung der Formel A handelt es sich um ein oder mehrere Aminocyclit-Derivate der allgemeinen Formel A 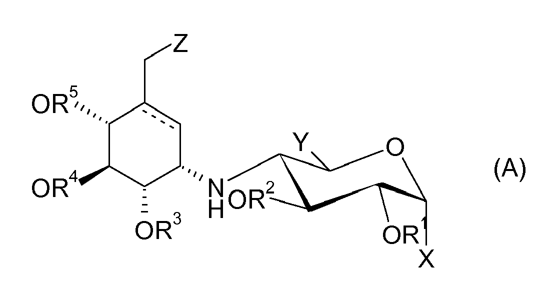 worin bedeuten:
- X: OH, OR⁶, SH, SR⁷, NH₂ oder NHR⁷, bevorzugt OR⁶;
- Y: Alkyl-, Aryl, Alkylaryl- oder Arylalkylsubstituenten, die gegebenenfalls substituiert sein können, CH₂N₃, CH₂NH₂, CH₂NHAc, CH₂OCH₃ oder CO₂CH_{3;} bevorzugt C₁- C₆-Alkyl, besonders bevorzugt CH₃;
- Z: H, OH, O-C₁-C₆-Alkyl, bevorzugt OCH₃, OTs, OTr, OMs oder OAc, bevorzugt OH;
- R¹, R², R³ und R⁴: unabhängig voneinander H, Alkyl-, Aryl, Alkylaryl- oder Arylalkylsubstituenten, die gegebenenfalls substituiert sein können; Ac, Ts oder Ms; bevorzugt unabhängig voneinander H, C₁-C₆-Alkyl, bevorzugt CH₃, Ac, Ts oder Ms; bevorzugt H;
- R⁵: H, Alkyl-, Aryl, Alkylaryl- oder Arylalkylsubstituenten, die gegebenenfalls substituiert sein können, Ac, Ts, Ms oder 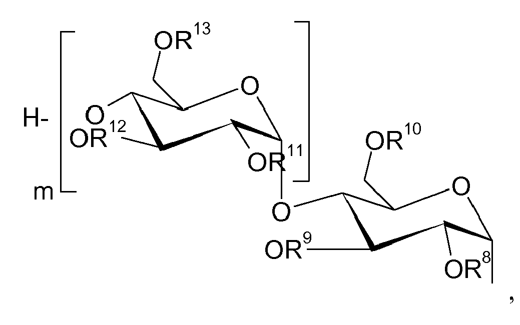 bevorzugt H, C₁-C₆-Alkyl, bevorzugt CH₃; besonders bevorzugt H;
- R⁶: H, Alkyl-, Aryl, Alkylaryl- oder Arylalkylsubstituenten, die gegebenenfalls substituiert sein können, Ac, Ts, Ms oder 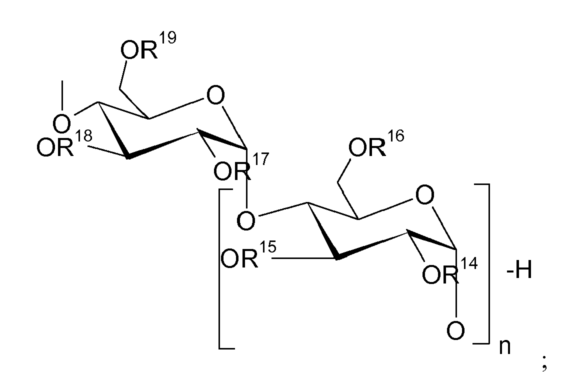 bevorzugt H, C₁-C₆-Alkyl, bevorzugt CH₃, oder 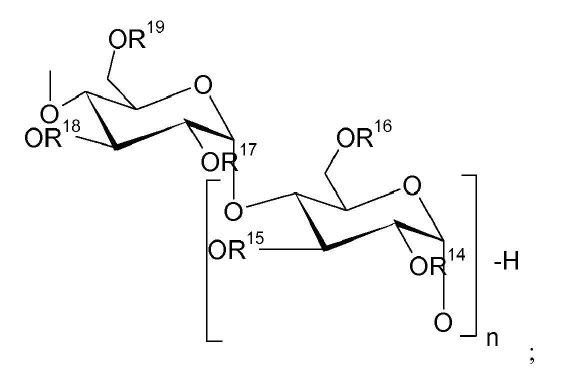 besonders bevorzugt 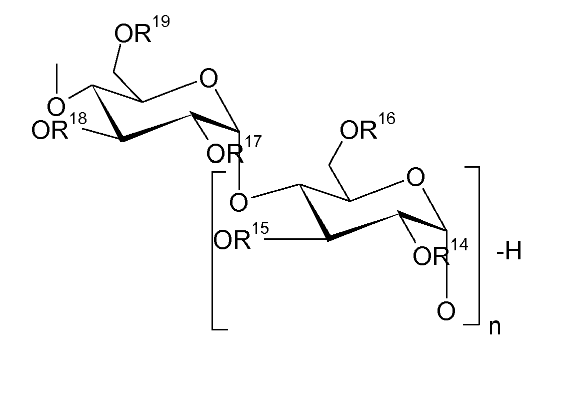
- R⁷: unabhängig voneinander Alkyl-, Aryl, Alkylaryl- oder Arylalkylsubstituenten, die gegebenenfalls substituiert sein können; Ac, Ts oder Ms; bevorzugt unabhängig voneinander C₁-C₆-Alkyl, bevorzugt CH₃, Ac, Ts oder Ms; bevorzugt CH₃;
- R⁸, R⁹, R¹⁰, R¹¹, R¹², R¹³,:
- R¹⁴, R¹⁵, R¹⁶, R¹⁷, R¹⁸, R¹⁹: unabhängig voneinander H, Alkyl-, Aryl, Alkylaryl- oder Arylalkylsubstituenten, die gegebenenfalls substituiert sein können, Ac, Ts oder Ms; bevorzugt unabhängig voneinander H, C₁-C₆-Alkyl, bevorzugt CH₃; besonders bevorzugt H;
- m: 0, 1, 2 oder 3, bevorzugt 0;
- n: 0, 1, 2 oder 3, bevorzugt 1;
- ----: die gestrichelte Bindung bedeutet, dass an dieser Position eine Einfachbindung oder eine Doppelbindung vorliegt, bevorzugt liegt eine Doppelbindung vor.

Geeignete Substituienten der vorstehend genannten Alkyl-, Aryl, Alkylaryl- oder Arylalkylsubstituenten sind z.B. Alkoholgruppen, Estergruppen, Ethergruppen oder Halogengruppen.

Die Alkyl-, Aryl, Alkylaryl- oder Arylalkylsubstituenten haben vorzugsweise 1 bis 20 Kohlenstoffatome, bevorzugt 1 bis 10 Kohlenstoffatome und insbesondere 1 bis 5 Kohlenstoffatome, z. B. 1 oder 2 Kohlenstoffatome.

Besonders bevorzugt sind Verbindungen der Formel A, worin bedeuten:
- X: OR⁶;
- Y: CH₃;
- Z: OH;
- R¹, R², R³ und R⁴: unabhängig voneinander H oder CH₃, bevorzugt H,
- R⁵: H oder CH₃, bevorzugt H;
- R⁶: 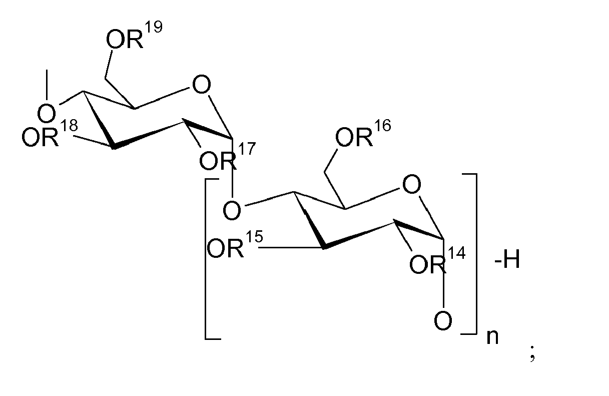
- R¹⁴, R¹⁵, R¹⁶, R¹⁷, R¹⁸, R¹⁹: unabhängig voneinander H oder CH₃, bevorzugt H;
- n: 1;
- ----: die gestrichelte Bindung bedeutet, dass an dieser Position eine Einfachbindung oder eine Doppelbindung vorliegt, bevorzugt liegt eine Doppelbindung vor.

Ganz besonders bevorzugt ist die Verbindung der Formel A Acarbose, d.h. die Reste und Gruppen in Formel A bedeuten:
- X: OR⁶_{;}
- Y: CH₃;
- Z: OH;
- R¹, R², R³ und R⁴: unabhängig voneinander H,

- R⁵: H; R⁶ 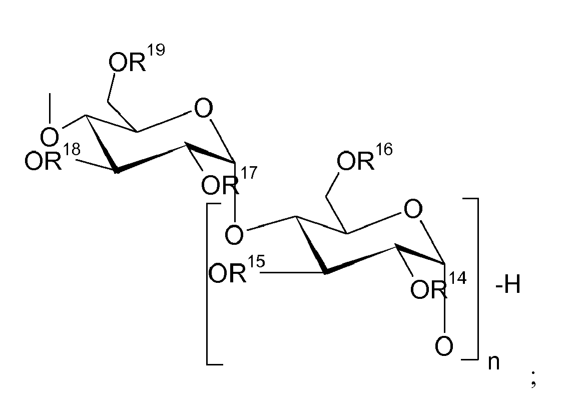
- R¹⁴_{,} R¹⁵, R¹⁶, R¹⁷, R¹⁸, R¹⁹: H;
- n: 1;
- ----: die gestrichelte Bindung bedeutet, dass an dieser Position eine Doppelbindung vorliegt.

In den Definitionen der Reste in Formel A weisen die Reste OMs, OTs, OAc und OTf sowie Ms, Ts, Ac und Tf die folgenden Bedeutungen auf:
- OMs: Mesylat;
- Ms: Methansulfonyl
- OTs: Tosylat
- Ts: p-Toluolsulfonyl
- OAc: Acetat
- Ac: Acetyl
- OTf: Triflat
- Tf: Trifluormethansulfonyl.

Die Aminocyclit-Derivate der Formel A können gemäß oder analog zu dem Fachmann bekannten Verfahren hergestellt werden. Geeignete Verfahren sind zum Beispiel in DE-A 2 347 782; DE-A 2 614 393; US 4,175,123; US 4,197,292; DE-A 2 855 409, DE-A 3 123 520 und Nat. Prod. Rep., 2003, 20, 137-166 und der darin genannten Literatur genannt. Die besonders bevorzugt eingesetzte Acarbose ist des Weiteren kommerziell.

Bei der Verbindung C handelt es sich um eine oder mehrere metallische Verbindungen der allgemeinen Formel:

X₂MHal₆ · x H₂O (C)

worin bedeuten:
- X: Alkalimetall, bevorzugt ausgewählt aus Na, Li und K, besonders bevorzugt Na; oder NH₄
- M: Übergangsmetall, bevorzugt ausgewählt aus Pd, Pt, Ni, Os und Ir, besonders bevorzugt Pd;
- Hal: Halogen, bevorzugt ausgewählt aus Cl, Br und I, besonders bevorzugt Cl;
- x: 0, 1, 2, 3, 4, 5 oder 6, bevorzugt 0, 4 oder 6, beonders bevorzugt 4.

Geeignete metallische Verbindungen der Formel (C) sind z.B. Na₂PdCl₆ · 4 H₂O; Na₂PtCl₆ · 6 H₂O; Na₂OsCl₆ · x H₂O oder Na₂IrCl₆ · 6 H₂O. Ganz besonders bevorzugt ist Na₂PdCl₆ · 4 H₂O (Palladat).

Die metallischen Verbindungen der Formel (C) sind kommerziell erhältlich bzw. können nach dem Fachmann bekannten Verfahren hergestellt werden.

Ein weiterer Aspekt der vorliegenden Erfindung betrifft die Verwendung einer Verbindung der Formel B oder von agrochemischen Salzen davon als Mittel zur Bekämpfung von Pilzen oder anderen Mikroorganismen.

Bei der Verbindung der Formel (B) handelt es sich um den Stoff mit der allgemeinen Formel (B) und/oder ein oder mehrere Derivate davon mit der allgemeinen Formel (B) 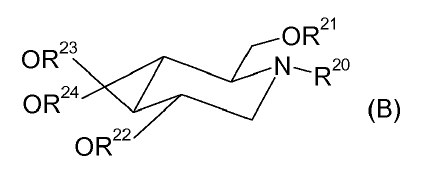 worin bedeuten:
- R²¹, R²², R²³, R²⁴: unabhängig voneinander H, Alkyl-, Aryl, Alkylaryl- oder Arylalkylsubstituenten, die gegebenenfalls substituiert sein können; bevorzugt unabhängig voneinander H, C₁-C₆-Alkyl oder hydroxysubstituiertes C₁-C₆-Alkyl; besonders bevorzugt H;
- R²⁰: ein Alkyl-, Aryl-, Alkylaryl- oder Arylalkylsubstituent, der gegebenenfalls substituiert ist; bevorzugt C₁-C₆-Alkyl oder hydroxysubstituiertes C₁-C₆-Alkyl; besonders bevorzugt 2-Hydroxyethyl.

Unter Derivaten des Stoffes sind insbesondere dessen Ether, Ester sowie Teilether und Teilester wie Palmitat, Acetate und Amide zu verstehen. Ferner sind Salze und Säureaddukte dieser Verbindungen eingeschlossen. Bevorzugte Derivate sind N-substituierte Derivate.

Geeignete Substituenten der vorstehend genannten Alkyl-, Aryl, Alkylaryl- oder Arylalkylsubstituenten sind z.B. Alkoholgruppen, Estergruppen, Ethergruppen oder Halogengruppen.

Die Alkyl-, Aryl, Alkylaryl- oder Arylalkylsubstituenten haben vorzugsweise 1 bis 20 Kohlenstoffatome, bevorzugt 1 bis 10 Kohlenstoffatome und insbesondere 1 bis 5 Kohlenstoffatome, z. B. 1 oder 2 Kohlenstoffatome. Ganz besonders bevorzugt sind Alkohole substituierter Alkylsubstituenten, wie 2-Hydroxyethyl.

Ganz besonders bevorzugt ist die Verbindung der Formel B Miglitol, d.h. die Reste und Gruppen in Formel B bedeuten:
- R²¹, R²², R²³, R²⁴: H; und
- R²⁰: 2-Hydroxyethyl.

Die Verbindungen der Formel B können gemäß oder analog zu dem Fachmann bekannten Verfahren hergestellt werden. Geeignete Verfahren sind z.B. in DE-A 23 47 782 genannt. Das besonders bevorzugt eingesetzte Miglitol ist des Weiteren kommerziell erhältlich.

Wie in den Beispielen gezeigt wurde, weisen die erfindungsgemäß verwendeten Verbindungen eine starke antifungale Wirkung auf und können daher zur Bekämpfung von Pilzen und/oder anderen unerwünschten Mikroorganismen, wie Bakterien, im Pflanzenschutz und im Materialschutz eingesetzt werden. Dabei hat es sich gezeigt, dass mit einer großen Selektivität Pilzenzyme inhibiert werden, die für das Eindringen und die Ausbreitung des Erregers oder Schädlings notwendig, und meist spezifisch für Mikroorganismen, insbesondere für Pilze sind, während die entsprechenden Pflanzenenzyme weiterhin eine funktionelle Aktivität zeigen. Somit stellen die erfindungsgemäß verwendeten spezifischen Inhibitoren von extrazellulären Enzymen von Pilzen ein vollends neuartiges Konzept zum Bekämpfen solcher Pilze bereit (siehe Beispiele). Da andere mikrobielle Mikroorgansimen Enzyme mit ähnlicher Aktivität und Struktur sekretieren, ist davon auszugehen, dass die erfindungsgemäß verwendeten Inhibitoren auch gegen andere unerwünschte Mikroorgansimen, wie Bakterien, wirksam sind.

Die erfindungsgemäß verwendeten Verbindungen haben antifungale Eigenschaften und lassen sich insbesondere zur Bekämpfung von phytopathogenen Pilzen, wie beispielsweise Plasmodiophoromycetes, Oomycetes, Chytridio-mycetes, Zygomycetes, Ascomycetes, Basidiomycetes, Deuteromycetes usw. einsetzen.

Unter "Mikroorganismen" im Sinne der vorliegenden Anmeldung werden insbesondere Pilze, Bakterien und andere Mikroorganismen verstanden, die für Pflanzen schädlich sind, insbesondere zu Pflanzenkrankheiten führen oder die zu einem unerwünschten Befall und/oder einer unerwünschten Zerstörung von Materialien führen.

Die erfindungsgemäß verwendeten Verbindungen lassen sich insbesondere im Pflanzenschutz beispielsweise zur Bekämpfung von Pseudomonadaceae, Rhizobiaceae, Enterobacteriaceae, Corynebacteriaceae und Streptomycetaceae einsetzen.

Beispielhaft aber nicht begrenzend sind nachfolgend einige Erreger von bakteriellen und pilzlichen Erkrankungen genannt, die im Rahmen der erfindungsgemäßen Verwendungen behandelt werden können:

Erkrankungen, hervorgerufen durch Erreger des Echten Mehltaus wie z.B. Blumeria-Arten, wie beispielsweise *Blumeria graminis*; Podosphaera-Arten, wie beispielsweise *Podosphaera leucotricha*; Sphaerotheca-Arten, wie beispielsweise *Sphaerotheca fuliginea*; Uncinula-Arten, wie beispielsweise *Uncinula necator*; Erkrankungen, hervorgerufen durch Erreger von Rostkrankheiten wie z.B. Gymnosporangium-Arten, wie beispielsweise *Gymnosporangium sabinae*; Hemileia-Arten, wie beispielsweise *Hemileia vastatrix*; Phakopsora-Arten, wie beispielsweise *Phakopsora pachyrhizi* und *Phakopsora meibomiae*; Puccinia-Arten, wie beispielsweise *Puccinia recondita*; Uromyces-Arten, wie beispielsweise *Uromyces appendiculatus*; Erkrankungen, hervorgerufen durch Erreger der Gruppe der Oomyceten wie z.B. Bremia-Arten, wie beispielsweise *Bremia lactucae*; Peronospora-Arten, wie beispielsweise *Peronospora pisi* oder *P. brassicae*; Phytophthora-Arten, wie beispielsweise *Phytophthora infestans*; Plasmopara-Arten, wie beispielsweise *Plasmopara viticola*; Pseudoperonospora-Arten, wie beispielsweise *Pseudoperonospora humuli* oder *Pseudoperonospora cubensis*; Pythium-Arten, wie beispielsweise *Pythium ultimum*; Blattfleckenkrankheiten und Blattwelken, hervorgerufen durch z.B. Alternaria-Arten, wie beispielsweise *Alternaria solani;* Cercospora-Arten, wie beispielsweise *Cercospora beticola*; Cladiosporum-Arten, wie beispielsweise *Cladiosporium cucumerinum*; Cochliobolus-Arten, wie beispielsweise *Cochliobolus sativus* (Konidienform: Drechslera, Syn: Helminthosporium); Colletotrichum-Arten, wie beispielsweise *Colletotrichum lindemuthanium*; Cycloconium-Arten, wie beispielsweise *Cycloconium oleaginum*; Diaporthe-Arten, wie beispielsweise *Diaporthe citri*; Elsinoe-Arten, wie beispielsweise *Elsinoe fawcettii*; Gloeosporium-Arten, wie beispielsweise *Gloeosporium laeticolor*; Glomerella-Arten, wie beispielsweise *Glomerella cingulata*; Guignardia-Arten, wie beispielsweise *Guignardia bidwelli*; Leptosphaeria-Arten, wie beispielsweise *Leptosphaeria maculans*; Magnaporthe-Arten, wie beispielsweise *Magnaporthe grisea*; Mycosphaerella-Arten, wie beispielsweise *Mycosphaerelle graminicola*; Phaeosphaeria-Arten, wie beispielsweise *Phaeosphaeria nodorum*; Pyrenophora-Arten, wie beispielsweise *Pyrenophora teres*; Ramularia-Arten, wie beispielsweise *Ramularia collo-cygni*; Rhynchosporium-Arten, wie beispielsweise *Rhynchosporium secalis*; Septoria-Arten, wie beispielsweise *Septoria apii*; Typhula-Arten, wie beispielsweise *Typhula incarnata*; Venturia-Arten, wie beispielsweise *Venturia inaequalis*; Wurzel- und Stengelkrankheiten, hervorgerufen durch z.B. Corticium-Arten, wie beispielsweise *Corticium graminearum*; Fusarium-Arten, wie beispielsweise *Fusarium oxysporum*; Gaeumannomyces-Arten, wie beispielsweise *Gaeumannomyces graminis*; Rhizoctonia-Arten, wie beispielsweise *Rhizoctonia solani;* Tapesia-Arten, wie beispielsweise *Tapesia acuformis*; Thielaviopsis-Arten, wie beispielsweise *Thielaviopsis basicola*; Ähren- und Rispenerkrankungen (inklusive Maiskolben), hervorgerufen durch z.B. Alternaria-Arten, wie beispielsweise *Alternaria spp*.; Aspergillus-Arten, wie beispielsweise *Aspergillus flavus*; Cladosporium-Arten, wie beispielsweise *Cladosporium spp*.; Claviceps-Arten, wie beispielsweise *Claviceps purpurea*; Fusarium-Arten, wie beispielsweise *Fusarium culmorum*; Gibberella-Arten, wie beispielsweise *Gibberella zeae*; Monographella-Arten, wie beispielsweise *Monographella nivalis*; Erkrankungen, hervorgerufen durch Brandpilze wie z.B. Sphacelotheca-Arten, wie beispielsweise *Sphacelotheca reiliana*; Tilletia-Arten, wie beispielsweise *Tilletia caries*; Urocystis-Arten, wie beispielsweise *Urocystis occulta*; Ustilago-Arten, wie beispielsweise *Ustilago nuda*; Fruchtfäule hervorgerufen durch z.B. Aspergillus-Arten, wie beispielsweise *Aspergillus flavus*; Botrytis-Arten, wie beispielsweise *Botrytis cinerea*; Penicillium-Arten, wie beispielsweise *Penicillium expansum*; Sclerotinia-Arten, wie beispielsweise *Sclerotinia sclerotiorum*; Verticilium-Arten, wie beispielsweise *Verticilium alboatrum*; Samen- und bodenbürtige Fäulen und Welken, sowie Sämlingserkrankungen, hervorgerufen durch z.B. Fusarium-Arten, wie beispielsweise *Fusarium culmorum*; Phytophthora Arten, wie beispielsweise *Phytophthora cactorum*; Pythium-Arten, wie beispielsweise *Pythium ultimum*; Rhizoctonia-Arten, wie beispielsweise *Rhizoctonia solani*; Sclerotium-Arten, wie beispielsweise *Sclerotium rolfsii*; Krebserkrankungen, Gallen und Hexenbesen, hervorgerufen durch z.B. Nectria-Arten, wie beispielsweise *Nectria galligena*; Welkeerkrankungen hervorgerufen durch z.B. Monilinia-Arten, wie beispielsweise *Monilinia laxa*; Deformationen von Blättern, Blüten und Früchten, hervorgerufen durch z.B. Taphrina-Arten, wie beispielsweise *Taphrina deformans*; Degenerationserkrankungen holziger pflanzen, hervorgerufen durch z.B. Esca-Arten, wie beispielsweise *Phaemoniella clamydospora*; Blüten- und Samenerkrankungen, hervorgerufen durch z.B. Botrytis-Arten, wie beispielsweise *Botrytis cinerea*; Erkrankungen von Pflanzenknollen, hervorgerufen durch z.B. Rhizoctonia-Arten, wie beispielsweise *Rhizoctonia solani;* Xanthomonas-Arten, wie beispielsweise *Xanthomonas campestris pv. oryzae*; *Pectobacterium spp.* und Arten, wie beispielsweise *Clavibacter michiganensis ssp. Sepedonicus, Ralstonia solanacearum Pseudomonas syringae pv. lachrymans* oder *Erwinia amylovora.*

Daher betrifft die erfindungsgemäße Verwendung gemäß dem ersten Aspekt der Erfindung in einer bevorzugten Ausführungsform eine Verwendung der Verbindungen der Formel A oder C zur Bekämpfung von Pilzen oder anderen Mikroorganismen in oder auf Pflanzen und/oder Saatgut.

Ferner betrifft die erfindungsgemäße Verwendung gemäß dem zweiten Aspekt der Erfindung in einer bevorzugten Ausführungsform eine Verwendung der Verbindungen der Formel B zur Bekämpfung von Pilzen oder anderen Mikroorganismen in oder auf Pflanzen.

Dabei schließt erfindungsgemäß der Begriff "Pflanze" auch Pflanzenteile ein. Daher können im Rahmen der vorliegenden Erfindung insbesondere sowohl oberirdische Pflanzenteile wie auch Pflanzenteile des Bodens behandelt werden.

Die Verbindungen der erfindungsgemäßen Verwendung können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im Allgemeinen von 1 bis 10 Tage, vorzugsweise 1 bis 7 Tage nach der Behandlung der Pflanzen mit den Wirkstoffen.

Ferner lassen sich die Verbindungen der Formel A und C zur Behandlung von Saatgut und Samen einsetzten.

Die erfindungsgemäßen Wirkstoffe eignen sich auch zur Steigerung des Ernteertrages. Sie sind außerdem mindertoxisch und weisen eine gute Pflanzenverträglichkeit auf.

Die erfindungsgemäßen Wirkstoffe können gegebenenfalls in bestimmten Konzentrationen und Aufwandmengen auch als Herbizide, zur Beeinflussung des Pflanzenwachstums, sowie zur Bekämpfung von tierischen Schädlingen verwendet werden. Sie lassen sich gegebenenfalls auch als Zwischen- und Vorprodukte für die Synthese weiterer Wirkstoffe einsetzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen (Letzteres nur im Falle der Verbindungen der Formel A und C) sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen (Letzteres nur im Falle der Verbindungen der Formel A und C).

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

In einer weiteren bevorzugten Ausführungsform der ersten beiden Aspekte der Erfindung werden die Verbindungen der Formel A, B, oder C im Rahmen des Materialschutzes, insbesondere als Holzschutzmittel verwendet.

Im Materialschutz lassen sich die erfindungsgemäßen Stoffe zum Schutz von technischen Materialien gegen Befall und Zerstörung durch unerwünschte Mikroorganismen einsetzen.

Unter technischen Materialien sind im vorliegenden Zusammenhang nichtlebende Materialien zu verstehen, die für die Verwendung in der Technik zubereitet worden sind. Beispielsweise können technische Materialien, die durch erfindungsgemäße Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Wärmeübertragungsflüssigkeiten genannt, besonders bevorzugt Holz.

Als Mikroorganismen, die einen Abbau oder eine Veränderung der technischen Materialien bewirken können, seien beispielsweise Bakterien und Pilze, genannt. Vorzugsweise wirken die erfindungsgemäßen Wirkstoffe gegen Pilze, insbesondere holzverfärbende und holzzerstörende Schimmelpilze (Basidiomyceten).

Es seien beispielsweise Mikroorganismen der folgenden Gattungen genannt:

Alternaria, wie *Alternaria tenuis*; Aspergillus, wie *Aspergillus niger*; Chaetomium, wie *Chaetomium globosum*; Coniophora, wie *Coniophora puetana*; Lentinus, wie *Lentinus tigrinus*; Penicillium, wie *Penicillium glaucum*; Polyporus, wie *Polyporus versicolor*; Aureobasidium, wie *Aureobasidium pullulans*; Sclerophoma, wie *Sclerophoma pityophila*; Trichoderma, wie *Trichoderma viride*,

Beispielhaft aber nicht begrenzend sind nachfolgend einige Pilze genannt, die im Rahmen der erfindungsgemäßen Verwendungen als Holzschutzmittel behandelt werden können:
Schimmelpilze, insbesondere *Trametes versicolor, Gloeophyllum trabeum* und *Poria placenta;*
holzzersetzende Pilze, die einen hohen ökonomischen Schaden in Bauholz und anderen Holzprodukten verursachen und wichtig im Materialschutz sind (z.B. Holzfaser(dämm)platten, MDF (mitteldichte Faserplatten), OSB (oriented strand board), Spanplatten);
Rotfäule, wie z.B. *Heterobasidion annosum;*
Bläuepilze, wie z.B. Pilze der Ceratocystis-Familie;
Braunfäule, wie z.B. *Coniophora arida, Coniophora mertdioides, Coniophora puteana, Daedalea quercina, Fistuiina hepatica, Fomitopsis rosea, Gloeophyllum abietmum, Gloeophyllum sepiarium, Gloeophyllum striatum, Gloeophyllum subferrugilaeum, Gloeophyllum trabeum, Laetiporus sulphureus, Lentinus cyathiformis, Keminus lepideus, PaxilIus panuoides, Phaeohis schweinitzii, Poria monticola, Poria xantha, Serpula cmffluens, Serpula himantioides, Serpula lacrymans, Tyromyces caesius;*
Ascomyceten, wie z.B. *Fungi imperfecti, Aureobasidium pulullans, Botryosphaeria rhodina, Ceratocystis pilifera, Chaetomium globosum, Dothichiza populea;*
und Weißfäule, wie z.B. *Armillariella mellea, Bjerkandera adusta, Chondrostereum purpureum, Collybia butyracea, Collybia velutipes, Coriolus versicolor, Fomes fomentarius, Heterobasidion annosum, Hirschioporus abietinus, Hirschioporus fuscoviolacens, lnnonotus obliqutls, Perenniporia subacida, Phellinus igniarius, Phellinus pini, Phlebia giganlea, Pleurotus ostreatus, Rigidoporus nigrescens, Schizophyllum commune*.

Die folgenden Ausführungsformen gelten sowohl für de Pfanzenschutz als auch den Materialschutz.

Die Wirkstoffe können in Abhängigkeit von ihren jeweiligen physikalischen und/ oder chemischen Eigenschaften im Rahmen der vorliegenden Erfindung in die üblichen Formulierungen überfuhrt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden.

Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Bims, Marmor, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier und/oder schaumerzeugende Mittel kommen infrage: z.B. nichtionogene und anionische Emulgatoren, wie Polyoxyethylen-Fettsäureester, Polyoxyethylen-Fettalkoholether, z.B. Alkylaryl-polyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Es können in den Formulierungen Haftmittel, wie Carboxymethylcellulose, natürliche und synthetische pulverige, körnige oder latexformige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe, wie anorganische Pigmente, z.B. Eisenoxid, Titanoxid, Ferrocyanblau, und organische Farbstoffe, wie Alizarin-, Azo- und Metallphthalocyaninfarbstoffe, und Spurennährstoffe, wie Salze von Eisen, Mangan, Bor, Kupfer, Kobalt, Molybdän und Zink, verwendet werden.

Die Formulierungen enthalten im Allgemeinen zwischen 0,1 und 95 Gewichtsprozent Wirkstoff, vorzugsweise zwischen 0,5 und 90 %, vorzugsweise zwischen 0,7 und 85%, stärker bevorzugt zwischen 1 und 80%, noch stärker bevorzugt zwischen 1,5 und 75%.

Die Wirkstoffe können als solche, in Form ihrer Formulierungen oder den daraus bereiteten Anwendungsformen, wie gebrauchsfertige Lösungen, Suspensionen, Spritzpulver, Pasten, lösliche Pulver, Stäubemittel und Granulate angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Im Falle der Verbindungen mit der allgemeinen Formel (A) und (C) kann auch das Saatgut der Pflanzen behandelt werden.

Beim Einsatz der erfindungsgemäßen Wirkstoffe als antifungale Substanzen können die Aufwandmengen je nach Applikationsart innerhalb eines größeren Bereiches variiert werden. Bei der Behandlung von Pflanzenteilen liegen die Aufwandmengen an Wirkstoff im Allgemeinen zwischen 0,1 und 10.000 g/ha, vorzugsweise zwischen 10 und 1.000 g/ha. Bei der Saatgutbehandlung liegen die Aufwandmengen an Wirkstoff im Allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoff im Allgemeinen zwischen 0,1 und 10.000 g/ha, vorzugsweise zwischen 1 und 5.000 g/ha.

Wie bereits oben erwähnt, können erfindungsgemäß alle Pflanzen und deren Teile behandelt werden. In einer bevorzugten Ausfuhrungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Rassen, Bio- und Genotypen sein.

Die Pflanzen können sowhol nicht-transgene als auch transgene Pfanzen sein. Bevorzugte nicht-transgene Pflanzen sind Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben), besonders bevorzugt Getreide, am stärksten bevorzugt Weizen.

Zu den ebenfalls erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Getreide, Mais, Soja, Kartoffel, Baumwolle, Tabak und Raps besonders und insbesondere Weizen hervorgehoben werden. Als Eigenschaften ("Traits") werden 5 besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryLA(a), CrylA(b), CrylA(c), CryllA, CrylTIA, CryITJB2, Cry9c Cry2Ab, Cry3Bb und CrylF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucoton® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), EVfl® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Gemäß einer weiteren bevorzugten Ausführungsform sind die Pilze oder Mikroorganismen phytopathogen, d.h. sie sind für die jeweilige Pflanze ein Krankheitserreger.

In einer anderen besonderen Ausführungsform wird die Verbindung der erfindungsgemäßen Verwendung oder das agrochemische Salz davon in Kombination mit einem weiteren Wirkstoff, ausgewählt aus der Gruppe bestehend aus Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals verwendet.

Die erfindungsgemäßen Wirkstoffe können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Als Mischpartner kommen zum Beispiel folgende Verbindungen infrage:

### Fungizide:

### 1. Inhibition der Nucleinsäure Synthese

Benalaxyl, Benalaxyl-M, Bupirimat, Chiralaxyl, Clozylacon, Dimethirimol, Ethirimol, Furalaxyl, Hymexazol, Metalaxyl-M, Ofurace, Oxadixyl, Oxolinsäure

### 2. Inhibition der Mitose und Zellteilung

Benomyl, Carbendazim, Diethofencarb, Fuberidazole, Pencycuron, Thiabendazol, Thiophanat-methyl, Zoxamid

### 3. Inhibition der Atmungskette

### 3.1 Komplex I

Diflumetorim

### 3.2 Komplex II

Boscalid, Carboxin, Fenfuram, Flutolanil, Furametpyr, Mepronil, Oxycarboxin, Penthiopyrad, Thifluzamid

### 3.3 Komplex III

Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin

### 3.4 Entkoppler

Dinocap, Fluazinam

### 3.5 Inhibition der ATP Produktion

Fentinacetat, Fentinchlorid, Fentinhydroxid, Silthiofam

### 4. Inhibition der Aminosäure- und Proteinbiosynthese

Andoprim, Blasticidin-S, Cyprodinil, Kasugamycin, Kasugamycinhydrochlorid Hydrat, Mepanipyrim, Pyrimethanil

### 5. Inhibition der Signal Transduktion

Fenpiclonil, Fludioxonil, Quinoxyfen

### 6.Inhibition der Fett- und Membran Synthese

Chlozolinat, Iprodion, Procymidon, Vinclozolin, Pyrazophos, Edifenphos, Iprobenfos (IBP), Isoprothiolan, Tolclofos-methyl, Biphenyl Iodocarb, Propamocarb, Propamocarb hydrochlorid

### 7. Inhibition der Ergosterol Biosynthese

Fenhexamid, Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol, Aldimorph, Dodemorph, Dodemorphacetat, Fenpropimorph, Tridemorph, Fenpropidin, Spiroxamin, Naftifin, Pyributicarb, Terbinafin

### 8. Inhibition der Zellwand Synthese

Benthiavalicarb, Bialaphos, Dimethomorph, Flumorph, Iprovalicarb, Polyoxins, Polyoxorim, Validamycin A

### 9. Inhibition der Melanin Biosynthese

Capropamid, Diclocymet, Fenoxanil, Phtalid, Pyroquilon, Tricyclazol

### 10. Resistenzinduktion

### 11. Acibenzolar-S-methyl, Probenazol, Tiadinil

### 12. Multisite

Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

### 13. Unbekannt

Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-HydroxychinolinsuIfat, Irumamycin, Methasulphocarb, Metrafenon, Methylisothiocyanat, Mildiomycin, Natamycin, Nickeldimethyldithiocarbamat, Nitrothal-isopropyl, octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid and 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H-imidazole-5-carboxylat, 3,4,5-Trichlor-2,6-pyridindicarbonitril, Methyl2-[[[cyclopropyl[(4-methoxyphenyl)imino]methyl]thio]methyl]-alpha.-(methoxymethylen)-benzacetat,4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyljethyl]-3-methyl-2-[(methylsulfonyl)amino]-butanamid,5-Chlor-7-(4-methylpiperidin-1 -yl)-6-(2,4,6-trifluorophenyl)[ 1,2,4]triazolo[1 ,5-a]pyrimidin,5-Chlor-6-(2,4,6-trifluorophenyl)-N-[( 1 R)-1 ,2,2-trimethylpropyl] [ 1,2,4]triazolo[ 1,5-a]pyrimidin-7-amin, 5-Chlor-N-25 [(1R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlomicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1Fluor-2-phenylethyl)oxy] phenyl] 3 0 ethyliden]amino]oxy]methyl]-alpha-(methoxyimino)-N-methyl-alphaE-benzacetamid, N- {2-[3-Chlor-5-(trifluormethyl)pyridin-2-yl]ethyl}-2-(trifluoromethyl)benzamid, N-(3', 4'-dichlor-S-fluorbiphenyl^-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1- carbonsäure, 0-[1-[(4-Methoxyphenoxy)methyl]-2,2-dimethylpropyl]-1H-imidazol- 1- carbothioic acid, 2-(2-{[6-(3-Chlor-2-methylphenoxy)-5-fluorpyrimidin-4-yl]oxy}phenyl)-2-(methoxyimino)-N-methylacetamid

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

### 1. Acetylcholinesterase (AChE) Inhibitoren

1.1 Carbamate (z.B. Alanycarb, Aldicarb, Aldoxycarb, Allyxycarb, Aminocarb, Azamethiphos, Bendiocarb, Benfuracarb, Bufencarb, Butacarb, Butocarboxim, Butoxycarboxim, Carbaryl, Carbo-furan, Carbosulfan, Chloethocarb, Coumaphos, Cyanofenphos, Cyanophos, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Triazamate, Trimethacarb, XMC, Xylylcarb)
1.2 Organophosphate (z.B. Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvin-phos, Chlormephos, Chlorpyrifos (-methyl/-ethyl), Coumaphos, Cyanofenphos, Cyanophos, Chlor-fenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupy-razofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Metha-midophos, Methidathion, Mevinphos, Monocrotophos, Naled, Omethoate, Oxydemeton-methyl, Para-thion (-methylAethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion)

### 2. Natrium-Kanal-Modulatoren / Spannungsabhängige Natrium-Kanal-Blocker

2.1 Pyrethroide (z.B. Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlo-vaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, DDT, Deltamethrin, Empenthrin (1R-isomer), Esfenvalerate, Etofenprox, Fenfluthrin, Fenpropathrin, Fenpyrithrin, Fen-valerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (eis-, trans-), Phenothrin (IR-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (1R-isomer), Tralome-thrin, Transfluthrin, ZXI 8901, Pyrethrins (pyrethrum))
2.2 Oxadiazine (z.B. Indoxacarb)

### 3.Acetylcholin-Rezeptor-Agonisten/-Antagonisten

3.1 Chloronicotinyle/Neonicotinoide (z.B. Acetamiprid, Clothianidin, Dinotefuran, Imidacloprid, Ni-tenpyram, Nithiazine, Thiacloprid, Thiamethoxam)
3.2 Nicotine, Bensultap, Cartap

### 4. Acetylcholin-Rezeptor-Modulatore

4.1 Spinosyne (z.B. Spinosad)

### 5. GABA-gesteuerte Chlorid-Kanal-Antagonisten

5.1 Cyclodiene Organochlorine (z.B. Camphechlor, Chlordane, Endosulfan, Gamma-HCH, HCH, Heptachlor, Lindane, Methoxychlor
5.2 Fiprole (z.B. Acetoprole, Ethiprole, Fipronil, Vaniliprole)

### 6. Chlorid-Kanal-Aktivatoren

6.1 Mectine (z.B. Abamectin, Avermectin, Emamectin, Emamectin-benzoate, Ivermectin, Milbemectin, Milbemycin)

### 7. Juvenilhormon-Mimetika

(z.B. Diofenolan, Epofenonane, Fenoxycarb, Hydroprene, Kinoprene, Methoprene, Pyriproxifen, Triprene)

### 8. Ecdysonagonisten/disruptoren

8.1 Diacylhydrazine (z.B. Chromafenozide, Halofenozide, Methoxyfenozide, Tebufenozide)

### 9. Inhibitoren der Chitinbiosynthese

9.1 Benzoylhamstoffe (z.B. Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Tri- flumuron)
9.2 Buprofezin
9.3 Cyromazine

### 10. Inhibitoren der oxidativen Phosphorylierung, ATP-Disruptoren

10.1 Diafenthiuron
10.2Organotine (z.B. Azocyclotin, Cyhexatin, Fenbutatin-oxide)

### 11. Entkoppler der oxidativen Phoshorylierung durch Unterbrechung des H-Protongradienten

11.1 Pyrrole (z.B. Chlorfenapyr)
11.2 Dinitrophenole (z.B. Binapacyrl, Dinobuton, Dinocap, DNOC)

### 12. Site-I-Elektronentransportinhibitoren

12.1 METrs (z.B. Fenazaquin, Fenpyroximate, Pyrimidifen, Pyridaben, Tebufenpyrad, Tolfenpyrad)
12.2 Hydramethylnone
12.3Dicofol

### 13. Site-II-Elektronentransportinhibitoren

13.1 Rotenone

### 14. Site-III-Elektronentransportinhibitoren

14.1 Acequinocyl, Fluacrypyrim

### 15. Mikrobielle Disruptoren der Insektendarmmembran

Bacillus thuringiensis-Stämme

### 16. Inhibitoren der Fettsynthese

16.1 Tetronsäuren (z.B. Spirodiclofen, Spiromesifen)
16.2 Tetramsäuren [z.B. 3-(2,5-Dimethylphenyl)-8-methoxy-2-oxo-1-azaspiro[4.5]dec-3-en-4-yl ethyl carbonate (alias: Carbonic acid, 3-(2,5-dimemylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)]

### 17. Carboxamide

(z.B. Flonicamid)

### 18. Oktopaminerge Agonisten

(z.B. Amitraz)

### 19. Inhibitoren der Magnesium-stimulierten ATPase

(z.B. Propargite)

### 20. Phthalamide

(z.B. N²-[1, 1 -Dimethyl-2-(methylsulfonyl)ethyl]-3-iod-N¹-[2-methyl-4-[ 1,2,2,2-tetrafluor-1 - (trifluor-methyl)ethyl]phenyl]-1,2-benzenedicarboxamide (CAS-Reg.-No.: 272451-65-7), Flubendiamide)

### 21. Nereistoxin-Analoge

(z.B. Thiocyclam hydrogen oxalate, Thiosultap-sodium)

### 22. Biologika, Hormone oder Pheromone

(z.B. Azadirachtin, Bacillus spec, Beauveria spec, Codlemone, Metarrhizium spec, Paecilomyces spec, Thuringiensin, Verticillium spec.)

### 23. Wirkstoffe mit unbekannten oder nicht spezifischen Wirkmechanismen

23.1 Begasungsmittel (z.B. Aluminium phosphide, Methyl bromide, Sulfuryl fluoride)
23.2 Selektive Fraßhemmer (z.B. Cryolite, Flonicamid, Pymetrozine)
23.3 Milbenwachstumsinhibitoren (z.B. Clofentezine, Etoxazole, Hexythiazox)
23.4Amidoflumet, Benclothiaz, Benzoximate, Bifenazate, Bromopropylate, Buprofezin, Chinomethi-onat, Chlordimeform, Chlorobenzilate, Chloropicrin, Clothiazoben, Cycloprene, Cyflumetofen, Di-cyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methylphenyl-propylcarbamat (Tsumacide Z), die Verbindung 3-(5-Chlor-3-pyridinyl>8-(2,2^-trifluorethyl>8-azabicyclo[3.2.1 ]octan-3-carbonitril (CAS-Reg.-Nr. 185982-80-3) 5 und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Auch eine Mischung mit anderen bekannten Wirkstoffen, wie Herbiziden, oder mit Düngemitteln und Wachstumsregulatoren, Safenern bzw. Semiochemicals ist möglich.

Ein weiterer Aspekt der Erfindung betrifft ein Mittel zur Bekämpfung von Pilzen oder anderen Mikroorganismen in oder auf Pflanzen, Saatgut und/oder Material, insbesondere Holz, enthaltend mindestens eine der Verbindungen der Formel A oder C und agrochemisch oder im Materialschutz übliche Hilfs- und/ oder Zusatzstoffe.

Ein anderer weitere Aspekt der Erfindung betrifft ein Mittel zur Bekämpfung von Pilzen oder anderen Mikroorganismen in oder auf Pflanzen und/oder Holz, enthaltend mindestens eine der Verbindungen der Formel B und agrochemisch oder im Materialschutz übliche Hilfs- und/ oder Zusatzstoffe.

Für die erfindungsgemäßen Mittel sind die oben im Rahmen der erfindungsgemäßen Verwendung angegebenen bevorzugten Ausführungsformen und Beispiele entsprechend anwendbar. Dies gilt insbesondere für die Hilfs- und Zusatzstoffe.

In einer besonderen Ausführungsform enthält das erfindungsgemäße Mittel noch ferner mindestens einen weiteren Wirkstoff ausgewählt aus der Gruppe bestehend aus Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals. Dabei sind die oben angegebenen Ausführungsformen entsprechend anwendbar.

In einer besonderen Ausführungsform der erfindungsgemäßen Verwendung oder des Mittels der Erfindung sind die Pilze ausgewählt aus der Gruppe bestehend aus *Blumeria graminis ,Phakopsora pachyrhizi, Phytophthora infestans, Pythium ultimum, Magnaporthe grisea, Venturia inaequalis, Fusarium oxysporum, Rhizoctonia solani, Gibberella zeae, Sclerotinia sclerotiorum, Botrytis cinerea, Alternaria solani, Puccinia graminis, Colletotrichum graminicola* und *Mycosphaerella graminicola.*

In einem weiteren Aspekt betrifft die Erfindung ein Saatgut, das mit mindestens einer Verbindung gemäß der Verwendung des ersten Aspektes behandelt wurde.

Auch für das erfindungsgemäße Saatgut sind die oben genannten Ausführungsformen enstprechend anwendbar.

In einer besonderen Ausführungsform wurde das Saatgut zusätzlich mit einem weiteren Wirkstoff behandelt, ausgewählt aus der Gruppe bestehend aus Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals. Auch für diese Ausführungsform gelten die oben genannten Beispiele.

Ferner betrifft die Erfindung in einem weiteren Aspekt ein Verfahren zum Screenen nach Pilz- oder Mikroorganismen-Befall inhibierenden Substanzen, umfassend die folgenden Schritte:
a) Bereitstellen einer Kandidatensubstanz, die in der Lage ist, ein Enzym zu inhibieren, das an dem Eindringen oder Ausbreiten des Pilzes oder des Mikroorganismus in die Pflanze beteiligt ist, und
b) Bestimmen, ob die Substanz in der Lage ist, Pilz- oder Mikroorganismus-Befall von Pflanzen zu inhibieren.

Kandidatensubstanzen können Substanzen aus einer Substanzbibliothek sein. Solche Substanzbibliotheken können kleine chemische Verbindungen, d.h. organische oder anorganische Verbindungen sein, oder Peptide oder Polypeptide sein. Die Kandidatensubstanz kann als ein Inhibitor für das Enzym bekannt sein, oder als ein Inhibitor eines Enzyms mit gleicher enzymatischer Aktivität bekannt sein. Die Kandidatensubstanz kann allerdings auch im Zusammenhang in der Funktion als Inhibitor unbekannt sein. Die Kandidatensubstanz kann zudem in einem anderen Zusammenhang als Inhibitor beschrieben sein, d.h. in einem anderen Zusammenhang außer als Inhibitoren, der das Eindringen und Ausbreiten eines Pilzes oder eines Mikroorganismus inhibiert, z.B. in einer medizinischen Anwendung beschrieben sein.

Enzyme, die an dem Eindringen des Pilzes oder Mikroorgansimuses in die Pflanze beteiligt sind, können beispielsweise extrazellulären Hydrolasen, Proteasen, oder polysaccharidabbauenden Enzyme sein, wie z.B. Amylasen, Cutinasen, Pektinasen, Cellulasen, α-Glucanasen, β-Glucanasen oder Xylanasen sein. Bevorzugt sind Enzyme, die im menschlichen Organismus nicht vorhanden sind, da mögliche Inhibitoren gegen diese Enzyme nicht toxisch auf den Menschen wirken können.

Solche Enzyme können an dem Eindringen des Pilzes in das pflanzliche Gewebe sein, wobei der Begriff "Eindringen" hier in seiner breitesten Form zu verstehen ist. Der Begriff "Eindringen" ist hiermit beabsichtigt, jegliche Form der Penetration der Pflanze oder des Samens einzuschließen, wie z.B. eine Hydrolyse der Zellwand oder anderen Geweben und/oder Polypeptiden pflanzlichen Ursprungs.

Der Begriff "Ausbreiten" ist im Zusammenhang mit dieser Erfindung unter Anderem zu verstehen als das Erschließen von Nährstoffen pflanzlichen Ursprunges durch den Pilz oder Mikroorganismus mit Hilfe von extrazellulären Enzymen. Das Erschließen von Nährstoffen umfasst beispielsweise das Erschließen von Stickstoff- und Kohlenstoffquellen, bevorzugt von Kohlenstoffquellen. Nicht als beschränkend auszulegende Beispiele für Enzyme, die an dem Ausbreiten eines Pilzes oder Mikroorganismus beteiligt sind, sind z.B. Amylasen, die den Pilz oder Mikroorganismus befähigen, die Stärke eines Kornes in für den Pilz oder Mikroorganismus metabolisierbaren Zucker umzuwandeln. Eine Form der Erschließung von Stickstoffquellen kann z.B. durch Proteasen erfolgen. Unter Ausbreietn kann aber auch das Wandern des Pilzes oder Mikroorganismus in der Pfanze verstanden werden.

Zum Bestimmen, ob die Kandidatensubstanz in der Lage ist, Pilz- oder Mikroorganismen-Befall von Pflanzen zu inhibieren, kann beispielsweise eine Differenzmessung des Frischgewichtes einer mit dem Pilz oder Mikroorganismus befallenen Jungpflanze in Gegenwart oder Abwesenheit der Kandidatensubstanz durchgeführt werden. Eine geringere Gewichtszunahme des Frischgewichtes deutet hierbei auf einen stärkeren Befall durch den Pilz oder Mikroorganismus hin. Alternativ kann der Grad des Befalles der Jungpflanze auch quantitativ durch einen ELISA bestimmt werden. Zum Nachweis von *F*. *graminearum* kann beispielsweise ein direkter ELISA (double sandwich ELISA) nach CLARK und ADAMS (1977) durchgeführt werden. Eine genauere Beschreibung zum Bestimmen des Grades des Befalls einer Pflanze durch einen Pilz oder Mikroorganismus findet sich in den folgenden Beispielen.

In einer besonderen Ausführungsform betrifft das Verfahren entsprechend des letzten Aspektes ein Verfahren, bei dem Schritt a) den zusätzlich Schritt des Bestimmens, ob die Kandidatensubstanz in der Lage ist, ein Enzym zu inhibieren, das an dem Eindringen oder Ausbreiten des Pilzes oder des Mikroorganismuses in die Pflanze beteiligt ist, umfasst.

Der Begriff "inhibieren" oder "Inhibition" ist im Rahmen dieser Erfindung gleichzusetzen mit dem Begriff "gehemmt" oder "Hemmung". Der Begriff "inhibieren" oder "Inhibition" ist hierbei als vollständige oder partielle Inhibition zu verstehen. Eine Substanz inhibiert das Eindringen und Ausbreiten des Pilzes oder des Mikroorganismus, wenn die Aktivität des Enzyms in Gegenwart der Substanz im Vergleich zu der Aktivität des Enzyms in Abwesenheit der Substanz um mindestens 20%, mindestens 30%, mindestens 40%, mindestens 50%, minestens 60%, mindestens 70%, mindestens 80%, mindestens 90% oder 100% reduziert ist.

Verfahren zum Bestimmen der Aktivität eines Enzymes sind dem Fachmann wohlbekannt. Beispielhaft für viele mögliche Methoden ist nachfolgend eine Möglichkeit dargestellt:

Hierfür wird zunächst ein Enzym zusammen mit seinem Substrat, vorzugsweise einem Polymer eines Polysaccharides bereitgestellt. In Folge dessen wird das eingesetzte Polymer durch das Enzym in kürzere Bruchstücke gespalten. Die Zugabe von Säure nach einer Reaktionszeit führt neben dem Stoppen der Enzymreaktion zum Ausfallen der nicht angegriffenen, großen Moleküle. Diese können durch Zentrifugation pelletiert werden, während die kleineren Spaltprodukte im Überstand bleiben. Diese verursachen eine Färbung des Überstandes, dessen Extinktion als Maß für die Enzymaktivität genutzt werden kann. Zum Nachweis von Xylanasen, Cellulasen, Amylasen und Proteasen wurden folgende Polysaccharid- bzw. Protein-Farbstoff-Konjugate verwendet:
- CMCelluloseRBB: (1,4βGlucan)
- CM-Curdlan-RBB): (1,3-β-Glucan)
- CM-Xylan-RBB: (1,4-β-Xylan)
- StärkeRBB: (1,4/1,6Glucan)
- Gelatine-RBB: (wasserlösliches Protein)

Eine genauere Ausführung dieses Verfahrens ist in den nachfolgenden Beispielen beschrieben.

Die erfindungsgemäßen Verfahren zum Screenen nach Pilz- oder Mikroorganismen-Befall inhibierenden Substanzen können auch in einem High-Throughput-Verfahren angewendet werden. Hierbei können viele Kandidatensubstanzen gleichzeitig durch mechanisierte Arbeitsabläufe getestet werden, was ein Screenen einer großen Anzahl möglicher Kandidatensubstanzen erlaubt. Genauere Verfahren zum Bestimmen der Aktivität eines Enzymes in einem High-Throughput-Screening oder ob die Substanz in der Lage ist, Pilz-oder Mikroorganismus-Befall von Pflanzen zu inhibieren sind dem Fachmann wohlbekannt.

Die Erfindung wird im Folgenden durch Figuren und Beispiele beschrieben, die dazu dienen, die Erfindung zu erläutern, nicht aber sie einzuschränken.

### BESHREIBUNG DER FIGUREN

Abb. 1: Einfluss von Amylase-Inhibitor AI-1 auf die Enzymaktivität von Amylasen unterschiedlicher Herkunft.
Abb. 2: Einfluss des Amylase-Inhibitors AI-2 auf die Enzymaktivität von Amylasen unterschiedlicher Herkunft.
Abb. 3: Einfluss von Amylase-Inhibitoren (AI-1 und AI-2) auf die Aktivität von Cellulase (*T.reesei* 6 U/mg Fa. Sigma).
Abb. 4: Einfluss der Inhibitoren (AI-1 und AI-2) auf die Enzymaktivität von Amylasen aus dem Kulturfiltrat (Strohextrakt) von *in vitro* angezogenen *F. Graminearum.*
Abb. 5: Einfluss von Amylase-Inhibitoren (AI-1 und AI-2) auf die Enzymaktivität von Amylasen aus den mit *F. graminearum* im Gewächshaus infizierten Winterweizenpflanzen.
Abb. 6: Einfluss des Cellulase-Inhibitors CI) auf die Enzymaktivität von Amylasen unterschiedlicher Herkunft.
Abb. 7: Einfluss von Cellulase-Inhibitor (CI) auf die Enzymaktivität von Amylasen aus dem Kulturfiltrat und aus den mit *F. graminearum* im Gewächshaus infizierten Winterweizenpflanzen.
Abb. 8: Einfluss unterschiedlicher Konzentrationen von Cellulase-Inhibitor CI auf das Wachstum von *F. graminearum* in Czapek-Dox-Medium (mit Saccharose als C-Quelle).
Abb. 9: Einfluss unterschiedlicher Konzentrationen von Cellulase-Inhibitor CI auf das Wachstum von *F. graminearum* in Czapek-Dox-CM-Cellulose-Medium.
Abb. 10: Einfluss unterschiedlicher Konzentrationen des Cellulase-Inhibitor CI auf das Wachstum von *Fusarium* in CD-Stärke-Substrat 14 Tage nach Inoculation mit *F. Graminearum*.
Abb. 11: Einfluss unterschiedlicher Konzentrationen von Amylase-Inhibitor AI-1 auf das Wachstum von *Fusarium* in Czapek-Dox Medium (Saccharose) innerhalb von 14 Tagen nach Inoculation mit *F. Graminearum*.
Abb. 12: Einfluss unterschiedlicher Konzentrationen des Amylase-Inhibitors AI-1 auf das Wachstum von *F. graminearum* in CD-Stärke-Medium während der 14-tägigen Wachstumsphase.
Abb. 13: Einfluss unterschiedlicher Konzentrationen des Amylase-Inhibitors AI-2 auf das Wachstum von *Fusarium* in Czapek-Dox (Saccharose) 8 Tage nach Inoculation mit *F. Graminearum*.
Abb. 14: Einfluss unterschiedlicher Konzentrationen des Amylase-Inhibitors AI-2 auf das Wachstum von Fusarium in CD-Stärke-Substrat 14 Tage nach Inoculation mit *F. graminearum*.
Abb. 15: Korrelation zwischen Cellulaseaktivität und ELISA von Weizenkornextrakten unterschiedlichen stark mit *F.graminearum* befallenen Weizenkornextrakten.
Abb. 16: Einfluss des Amymlase-Inhibitors AI-1 und des Cellulase-Inhibitors CI auf das Wachstum mit *F. graminearum* infizierter und nicht infizierter Weizenjungpflanzen auf Faltfilter nach zwei Wochen. **K** = nicht infizierte Pflanzen, **KF** = Kontrolle infiziert, **A** = AI-1 behandelt, und **AF** = AI-1 behandelt und infiziert, **P**= CI behandelt, und **PF** = CI behandelt und infiziert.
Abb. 17: Einfluss des Amymlase-Inhibitors AI-1 und des Cellulase-Inhibitors CI auf das Wachstum mit *F. graminearum* infizierter und nicht infizierter Weizenjungpflanzen auf Faltfilter nach zwei Wochen. **K** = nicht infizierte Pflanzen, **KF** = Kontrolle infiziert, **AF** = AI-1 behandelt und infiziert und **PF** = CI behandelt und infiziert.
Abb. 18: Einfluss des Amymlase-Inhibitors AI-1 und des Cellulase-Inhibitors CI auf das Blattfrischgewicht von mit *F. graminearum* infizierten und nicht infizierten Weizenjungpflanzen auf Faltfilter 2 Wochen nach Inokulation. **K** =nicht infiziert, **F.g.** = mit Fusarium graminearum infiziert, **K** + **AI-1** nicht infiziert + Inhibitor AI-1, **K** + **AI-1** = nicht infiziert + Inhibitor AI-1, **AI-1** + **F.g.** = infiziert + AI-1 behandelt, **K** + **CI** = nicht infiziert + Inhibitor CI, **CI+F.g.** = infiziert + Cellulase-Inhibitor CI.
Abb. 19: Quantitativer Nachweis von *Fusarium graminearum* in infizierten und nicht infizierten Weizenjungpflanzen auf Faltfilter mit und ohne Inhibitorbehandlung 2 Wochen nach Inokulation. **K** =nicht infiziert, **F.g.** = mit Fusarium graminearum infiziert, **K** + **AI-1** nicht infiziert + Inhibitor AI-1, **K** + **AI-1** = nicht infiziert + Inhibitor AI-1, **AI-1** + **F.g.** = infiziert + AI-1 behandelt, **K** + **CI** = nicht infiziert + Inhibitor CI, **CI** + **F.g.** = infiziert + Cellulase-Inhibitor CI.
Abb. 20: Quantitativer Nachweis von *Fusarium graminearum* in den Wurzeln infizierter und nicht infizierter Weizenpflanzen auf Faltfilter mit und ohne Inhibitorbehandlung 2 Wochen nach Inokulation. **K** =nicht infiziert, **F.g.** = mit Fusarium graminearum infiziert, **K** + **AI-1** nicht infiziert + Inhibitor AI-1, **K** + **AI-1** = nicht infiziert + Inhibitor AI-1, **AI-1** + **F.g.** = infiziert + AI-1 behandelt, **K** + **CI** = nicht infiziert + Inhibitor CI, **CI** + **F.g.** = infiziert + Cellulase-Inhibitor CI.
Abb. 21: Einfluss des Amymlase-Inhibitors AI-1 und des Cellulase-Inhibitors CI auf das Blattfrischgewicht mit *F. graminearum* infizierter und nicht infizierter Weizenjungpflanzen in Erdsubstrat im Gewächshaus nach vier Wochen (Versuch 1). **K** =nicht infiziert, **F.g.** = mit Fusarium graminearum infiziert, **K** + **AI-1** nicht infiziert + Inhibitor AI-1, **K** + **AI-1** = nicht infiziert + Inhibitor AI-1, **AI-1** + **F.g.** = infiziert + AI-1 behandelt, **K** + **CI** = nicht infiziert + Inhibitor CI, **CI** + **F.g.** = infiziert + Cellulase-Inhibitor CI.
Abb. 22: Einfluss des Amymlase-Inhibitors AI-1 und des Cellulase-Inhibitors CI auf das Blattfrischgewicht mit *F. graminearum* infizierter und nicht infizierter Weizenjungpflanzen in Erdsubstrat im Gewächshaus nach vier Wochen (Versuch 2). **K** =nicht infiziert, **F.g.** = mit Fusarium graminearum infiziert, **K** + **AI-1** nicht infiziert + Inhibitor AI-1, **K** + **AI-1** = nicht infiziert + Inhibitor AI-1, **AI-1** + **F.g.** = infiziert + AI-1 behandelt, **K** + **CI** = nicht infiziert + Inhibitor CI, **CI** + **F.g.** = infiziert + Cellulase-Inhibitor CI.
Abb.23: Quantitativer Nachweis von *Fusarium graminearum* in infizierten und nicht infizierten Weizenjungpflanzen in Erdsubstrat im Gewächshaus mit und ohne Inhibitorbehandlung 4 Woche nach Inokulation (Versuch 1). **K** =nicht infiziert, **F.g.** = mit Fusarium graminearum infiziert, **K** + **AI-1** nicht infiziert + Inhibitor AI-1, **K** + **AI-1** = nicht infiziert + Inhibitor AI-1, **AI-1** + **F.g.** = infiziert + AI-1 behandelt, **K** + **CI** = nicht infiziert + Inhibitor CI, **CI** + **F.g.** = infiziert + Cellulase-Inhibitor CI.
Abb.24: Quantitativer Nachweis von Fusarium graminearum in infizierten und nicht infizierten Weizenjungpflanzen in Erdsubstrat im Gewächshaus mit und ohne Inhibitorbehandlung 4 Woche nach Inokulation (Versuch 2). **K** =nicht infiziert, **F.g.** = mit Fusarium graminearum infiziert, **K** + **AI-1** nicht infiziert + Inhibitor AI-1, **K** + **AI-1** = nicht infiziert + Inhibitor AI-1, **AI-1** + **F.g.** = infiziert + AI-1 behandelt, **K** + **CI** = nicht infiziert + Inhibitor CI, **CI** + **F.g.** = infiziert + Cellulase-Inhibitor CI.
Abb. 25: Einfluss des Amylase-Inhibitors AI-1 (1 mg /ml) auf den Befall von *Blumeria graminis f. sp. tritici* 7 dpi.
Abb. 26: Einfluss des Amylase-Inhibitors AI-2 (1 mg/ml) auf den Befall von *Blumeria graminis f. sp. tritici* 7 dpi.
Abb. 27: Einfluss des Cellulase-Inhibitors CI (100 µg/ml) auf den Befall von *Blumeria graminis f. sp. tritici* 7 dpi.

### BEISPIELE

### Abkürzungen

- AI-1: Acarbose (Amylase-Inhibitor 1)
- AI-2: Miglitol (Amylase-Inhibitor 2)
- AK: Antikörper
- CDM: Czapek-Dox-Medium
- CI: Palladat (Cellulase-Inhibitor)
- CM-Cellulose: Cristol- Microcrystalline-Cellulose Substrat
- C-Quelle: Kohlenstoff-Quelle
- dpi: Days post inoculation
- ELISA: Enzyme-Linked-Immunosorbent Assay
- H₂O bidest.: Zweimal destilliertes Wasser
- IgG: Immungloblin G
- OD: Optische Dichte
- PDA: Potato-Dextrose-Agar
- PEM: Pea-Extrac-Medium
- PNPP: para-Nitrophenylphosphat
- PPK-Puffer: polyP kinase (Puffer)
- RBB: Rhemazol -Brilliant-Blue (Substrat)
- RSA: Rabbit serum albumin
- SEM: Strohextrakt Medium
- StrAP: Streptavidin-Alkalische- Phosphatase

### Chemikalien und Geräte

Nachfolgend sind die Chemikalien aufgeführt, die bei den Untersuchungen regelmäßig verwendet wurden. Die Nutzung weiterer Chemikalien wird unter den jeweiligen Kapiteln dargestellt:

### Chemikalien

| | |
|---|---|
| Agar-Agar | (MERK GmbH, Darmstadt) |
| Carboxymethylcellulose (CM-Cellulose) | (Wolff Walsrode AG, Walsrode) |
| CM-Cellulose-RBB, 1,4-β-Glucan | (Loewe, Otterfing) |
| CM-Curdlan-RBB, 1,3-β-Glucan | (Loewe, Otterfing) |
| CM-Gelatine-RBB, water soluble Protein | (Loewe, Otterfing) |
| Curdlan, β-1, 3 Glucan | (Wako Pure Chemical Industries Ltd., Japan) |
| Czapek Dox | (Scharlau Chemie S.A., Barcelona) |
| Enzymgemisch | (Cerestar GmbH, Zülpich) |
| Essigsäure | (Carl Roth GmbH, Karlsruhe) |
| Glucose | (MERK GmbH, Darmstadt) |
| Haferflocken | (Peter Kölln KGaA, Elmshorn) |
| HEPES | (Biomol, Hamburg) |
| Eisen(II)sulfat | (MERK GmbH, Darmstadt) |
| Magnesiumsulfat | (MERK GmbH, Darmstadt) |
| MES | (Biomol, Hamburg) |
| Natriumacetat | (MERK GmbH, Darmstadt) |
| Polenta | (SeeBerger, Ulm) |
| Potassiumchloride | (MERK GmbH, Darmstadt) |
| Potassiumsulfate | (MERK GmbH, Darmstadt) |
| Kartoffel Dextrose Brühe (PDB) | (Difco, Detroit,USA) |
| Stärke (SMITHIES) | (SERVA, Heidelberg) |
| Natriumnitrat | (Carl Roth GmbH + Co, Karlsruhe) |
| Stärke-RBB, 1,4- /-1,6-Glucan | (Loewe, Otterfing) |
| Sucrose | (MERK, Darmstadt) |
| Tween 60, 80 | (SERVA, Heidelberg) |
| Weizenöl | (Dr. Ritter GmbH, Freiburg) |
| Hefeextrakt | (Scharlau Chemie S.A., Barcelona) |

### Geräte

| | |
|---|---|
| Analysemühle (A10) | (Janke & Kunkel GmbH & Co KG, Staufenberg) |
| Tischzentrifuge | (Eppendorf AG, Hamburg) |
| Mini-Shaker | (Adolf Kühner AG, Schweiz) |
| Mikrotiterplatte | (Fa. SARSTEDT, Nümbrecht) |
| Petrischalen | (Fa. Greiner, Nürtingen) |
| Photometer | (SPECTRA II, SLT-Labintruments, Austria) |
| Zentrifugen | (Labofuge 400, Heraus Sepathech GmbH, Hamburg) |
| | (Sigma 4 K10 und 6 K10, Sigma Laborzentrifugen GmbH, Osterode) |
| Wasserbad | (MGW-Lauda M/20, Dr. R. Wobser KG, Lauda-Königsho fen) |

### Nährmedien

Für die Herstellung aller Medien wurde H₂O_{bidest} benutzt. Für feste Medien wurde 1,5 % Agar zugefügt. Für alle *in vitro* Experimente wurden Chemikalien und verwendete Gegenstände für 15 Minuten bei 121 °C autoklaviert. Der pH-Wert wurde vor dem Autoklavieren mit Hilfe von HCl und Essigsäure bzw. NaOH eingestellt.

### Czapek-Dox-Medium (CD)

| | |
|---|---|
| NaNO₃ | 2,0 g |
| KCl | 0,5 g |
| MgSO₄ | 0,5 g |
| K₂SO₄ | 0,35 g |
| FeSO₄ | 0,01 g |
| H₂O_{bidest} | ad 1000 ml |
| pH 6,5 | |

### Optionale C-Quellen:

Glucose, Saccharose 15 g / 1
CM-Cellulose, CM-Curdlan, Gelatine oder lösliche Stärke 5 g / 1

### Kartoffel Dextrose Agar (Potato Dextrose Agar, PDA)

Zur Sporulation von *Botrytis cinerea* und Kultivierung von *Rhizochtonia solani*
Kartoffel Dextrose Brühe (Potato Dextrose Broth) 24 g
H₂O_{bidest} ad 1000 ml
pH 6

### Stroh-Extrakt-Medium (SEM)

Zur Langzeitkultur und Sporulation von *Fusarium graminearum* sowie zur Kultivierung von *Botrytis cinerea, Rhizoctonia solani* und *Septoria tritici*.
Stroh (ca. 4 mm) 10 g
30 min. in 500 ml H₂O_{bidest} rühren und durch ein Teesieb und anschließend durch einen Faltfilter filtrieren.
Filtrat bis 1000 ml Gesamtvolumen mit H₂O_{bidest} auffüllen
H₂O_{bidest} 1000 ml
pH 6

### Erbsen-Extrakt-Glucose-Medium (Pea-Extrakt-Glucose-Medium, PEM)

Zur Langzeitkultur und zur Oosporulation von *Phytophthora infestans*
Erbsen (tiefgefroren) 200 g
Glucose 6 g
Leitungswasser 1000 ml
pH 7

### Karrottensaft-Medium (Carrot-Juice-Medium, CJM)

Zur Langzeitkultur und Oosporulation von *Septoria tritici*
Karottensaft (Fa. Grünhorst) 200 ml
CaCO₃ 2 g
H₂O_{bidest} 800 ml
pH 6

### Hafer-Stärke-Medium (Oats-Starch-Medium, OSM)

Zur Langzeitkultur und Oosporulation von *Pyricularia oryzae*
Haferflocken 30 g

### STÄRKE 10 G

Hefeextrakt 2 g
H₂O_{bidest} 1000 ml
pH 6

### Mais Medium (MM)

Zur Kultur von *Phythium ultimum*
Polenta 25 g
45 Minuten in Leitungswasser kochen und durch eine Gaze (100 µm) filtrieren
Weizenöl 100 µl zufügen
Leitungswasser ad 1000 ml
pH 5,5

### Stammhaltung und Herkunft der Pilzisolate

Alle in den Untersuchungen eingesetzten Pilzisolate stammen aus der Stammsammlung des Institutes für Pflanzenpathologie und Pflanzenschutz, jetzt Department für Nutzpflanzenwissenschaften der Georg-August-Universität Göttingen. Dem Untersuchungsziel und dem Verwendungszweck entsprechend wurden die Pilze entweder auf Festmedien oder in Flüssigkultur kultiviert. Flüssigkulturen wurden für Wachstumsversuche in Mikrotiterplatten und zur Erzeugung von Sporen von *F*. *graminearum* verwendet. Auf den Festmedien wurden Sporen der übrigen Pilzarten erzeugt sowie die Pilzstämme erhalten und vermehrt. Um genetische Veränderungen im Pilzmyzel durch wiederholtes Überimpfen und Wachsen auf Agarplatten auszuschließen, wurden die unten genanten Pilze in Polysterolpetrischalen (∅ 90 mm) auf dem mageren Strohextraktagar bei 6°C im Kühlraum aufbewahrt und alle 6 Monate überimpft.

### Bestimmung der Enzymaktivität in Mikrotiterplatten

Die Bestimmung der Enzymaktivitäten in Kulturfiltraten, Extrakten aus Pflanzenmaterial und kommerziellen Enzympräparaten wurde mit einer von WIRTH und WOLF (1990) entwickelte Methode in Mikrotiterplatten durchgeführt. Diese Methode basiert auf folgendem Prinzip:

Durch die Aktivität der Hydrolasen werden die eingesetzten Polymere in kürzere Bruchstücke gespalten. Die Zugabe von Säure nach einer Reaktionszeit führt neben dem Stoppen der Enzymreaktionen zum Ausfallen der nicht angegriffenen, großen Moleküle. Diese können durch Zentrifugation pelletiert werden, während die kleineren Spaltprodukte im Überstand bleiben. Diese verursachen eine Färbung des Überstandes, dessen Extinktion als Maß für die Enzymaktivität genutzt werden kann. Zum Nachweis von Xylanasen, Cellulasen, Amylasen und Proteasen wurden folgende Polysaccharid- bzw. Protein-Farbstoff-Konjugate verwendet:

| | |
|---|---|
| CMCelluloseRBB | (1,4βGlucan) |
| CM-Curdlan-RBB) | (1,3-β-Glucan) |
| CM-Xylan-RBB | (1,4-β-Xylan) |
| StärkeRBB | (1,4/1,6Glucan) |
| Gelatine-RBB | (wasserlösliches Protein) |

Für die Durchführung des Tests wurden Mikrotiterplatten (96 Tröge, Fa. Sarstedt, Nümbrecht) mit einer Kavität von 350 µl je Trog verwendet.

Der Test wurde wie folgt durchgeführt:
100 µl CM-CelluloseRBB (4 mg/ml Fa. LOEWE)
100 µl Probe in 0,1 M Natriumacetatpuffer
wurden im Wasserbad 1h bei 40°C inkubiert, der Leerwertansatz (Blank) wurde ohne Probe inkubiert. Nach der Inkubation wurden zu den Blanks 100 µl Probe pipettiert, danach sofort mit 100 µl 1N HCl gestoppt und für 10 min auf Eis gestellt. In den Untersuchungen wurden je Probe 3 Tests und 3 Blanks durchgeführt. Nach einer Zentrifugation der Mikrotiterplatten für 10 min bei 2500 rpm wurde 100 µl Überstand in Mikrotiterplatten mit einer Kavität von 185 µl je Trog überführt. Die Extinktion wurde in einem Mikrotiterplatten-Photometer bei einer Wellenlänge von 592 nm gemessen. Dabei wurde die Berechnung Units auf der Basis der reduzierenden Gruppen vorgenommen:

Im Falle der Cellulase entspricht eine OD592nm von 0, 5 ≙ 0.000092 Units

Im Falle der Amylase entspricht eine OD592nm von 0, 5 ≙ 0,00021 Units

### Prüfung unterschiedlicher Extraktionsmethoden für einen Vergleich von Enzymaktivität und Enzyme-linked Immunosorbent Assay (ELISA)

Für einen direkten Vergleich von Enzymaktivitäten und der mit dem ELISA ermittelten Pilzmenge war es erforderlich Extraktionsbedingungen zu erarbeiten, die es erlaubten, den Extrakt gleichzeitig mit beiden Methoden untersuchen zu können.

Leider war es nicht möglich die für den Enzymtest optimale Acetat-Puffer-Extraktion auch für den ELISA zu verwenden.

Eine Überprüfung der für den ELISA entwickelten Phosphatgepufferten physiologischen Kochsalzlösung (PPK-Puffer) im Cellulase-Test ergab , dass dieser Puffer selbst bei pH 7,4 mit dem bei pH 5,0 in Acetat-Puffer durchgeführten Test vergleichbare Werte zeigte.

### Herstellung des Inokulums

Die mit Strohextrakt befüllten Petrischalen wurden jeweils mit einem mit *Fusarium* bewachsenen Agarstück (∅ 4 mm) beimpft. Zwei Tage nach einer Inkubation im Dunkeln bei 20°C wurden die Platten 7 Tage bei 20°C unter 24 Stunden UV-Licht inkubiert. Die Sporengewinnung im flüssigen Strohextraktmedium verlief wie unter Beispiel 3 genannt. Zur Herstellung von Konidiensuspensionen wurden die sporulierenden Pilzkolonien unter sterilen Bedingungen mit 5 - 10 ml H₂O_{bidest} überflutet und mit Hilfe eines abgeflammten Objektträgers vom Agar vorsichtig abgekratzt. Die Suspension wurde mit Hilfe einer Kunststoffgaze mit 100 bzw. 200 µm Maschenweite (je nach Konidiengröße) filtriert und die Konidiendichte mit Hilfe einer Fuchs-Rosenthal-Kammer bestimmt. Im Falle der Strohextraktlösung wurde das Stroh durch die Gaze-Filtration entfernt. In allen Fällen wurde die Sporendichte auf 1,6 x 10⁵ Konidien /ml eingestellt.

### Enzyme Linked Immunosorbent Assay (ELlSA)

Zum Nachweis von *F. graminearum* wurde ein direkter ELISA (double sandwich ELISA) nach CLARK und ADAMS (1977) angewendet. Die Probeextraktion erfolgte mit dem Unterschied, dass hierbei der PPK-Puffer (pH 7,4) statt des Natriumacetat-Essigsäure-Puffers verwendet wurde.

Im Folgenden wird der Testansatz für einen direkten ELISA mit biotinylierten Detektionsantikörpern dargestellt, wie er bei den Routinetests eingesetzt wurde:
1) Je Kavität wurden 100 µl IgG (Beschichtungspuffer + AK (1 µg /ml) einpipettiert (die erste Reihe blieb frei) und die Mikrotiterplatte bei 4°C über Nacht inkubiert.
2) 3 x 3 min mit Waschpuffer waschen
3) 1 h blocken mit je 200 µl 0,2 % RSA in Beschichtungspuffer.
4) wie (2)
5) 100 µl im Extraktionspuffer aufgearbeitete Proben mit eine Wiederholung auftragen, über Nacht bei 4°C.
6) wie (2)
7) Zugabe von 100 µl im Detektionsantikörperlösung (0,1 µg /ml biotinylierter IgG in Konjugatpuffer) und über Nacht bei 4°C.
8) wie (2)
9) 100µl StrAP (Streptavidin-AP-Konjugat)- Lösung (1: 5000 verdünnt in Konjugatpuffer) für 1h bei 37°C inkubieren.
10) wie (2)
11) 100 µl Substratlösung (1 mg /ml pNPP in Substratpuffer) einpipettieren und im Dunkeln bei Raumtemperatur inkubieren.
12) Messen bei 405 nm (Referenzwellenlänge 592 nm) je nach Farbentwicklung 30, 60, 90, und 120 min bzw. bis 4 Stunden.

Bei allen ELISA-Varianten wurden Mikrotiterplatten (Immulon F-Typ, Dynatech) verwendet. Die Inkubation der Platten erfolgte bei 37°C im Wasserbad. Die Ermittlung optimaler Antikörper-/Antikörperkonjugat-/StrAP- und Probenkonzentrationen erfolgte nach den Angaben von CASPER und MEYER (1981).

### Produktion verschiedener Hydrolasen in vitro in Strohextrakt-Medium

6 g unbehandeltes Weizenstroh ((θ = 4 mm)) wurden in einen 1 1 Kolben mit 200 ml Aqua bidest. gegeben und 15 min bei 121°C autoklaviert. Die pH-Einstellung war nicht notwendig, da der Wert auf 6,3 lag. Nach der Abkühlung wurden die Kolben mit 10 mit *Fusarium graminearum* bewachsen Agarstückchen (∅ = 4 mm) beimpft und auf einem Schüttler bei Dunkelheit und einer Temperatur von 20°C inkubiert.

Sieben Tage nach der Beimpfung mit dem Pilz wurde die Wasser-Strohmehlsuspension durch ein Filterpapier (Rundfilter. 90 mm, Schleicher & Schuell. Dassei) unter sterilen Bedingungen gefiltert. Das Filtrat wurde dann 1:1 (oder 2:1 bei geringer Aktivität) mit 0,1 M Natriumacetat-Essigsäure-Puffer (pH 5) verdünnt. Anschließend erfolgte die Enzymbestimmung mit dem entsprechenden Substrat, wie vorhergehend beschrieben.

### Beispiel 1

### Einfluss der Amylase-Inhibitoren AI1 und AI2 und des Cellulase-Inhibitors CI auf die Enzymaktivität verschiedener Amylasen und Cellulasen

Die Auswahl der im Rahmen dieser Beispiele verwendeten Inhibitoren erfolgte einmal nach der Bedeutung der Schlüsselenzyme des Pathogens. Dabei wurde davon ausgegangen, dass Cellulasen für das Eindringen des Pilzes in das pflanzliche Gewebe essentiell sind, Amylasen dagegen für das Erschließen der C-Quelle Stärke des Samens unerlässlich sind (ROSEMARIE et al., 1991; LALAOUI et al., 2000). Ein Vergleich der Hemmbarkeit von Cellulasen und Amylasen verschiedener mikrobieller Herkunft, sollte zeigen, wie ausgeprägt ihre Spezifität ist.

Zu Optimierung der Inhibitionsbedingungen wurden verschiedene Konzentrationen der Amylaseinhibitoren (AI-1 und AI-2) und der Cellulaseinhibitor (CI) bei Vorinkubationszeiten von 30 min. und 60 min. mit Hilfe verschiedener Enzympräparate getestet (s.u.).
Amylase aus *Aspergillus oryzae* (35 U/mg, Fluka)
Amylase aus *Aspergillus oryzae* (200 U/mg, Sigma)
Amylase aus *Bacillus sp.* (1500 - 3000 U/mg, Sigma) circa 3000 U/mg
Amylase aus Humanamylase (500 U/mg, Sigma)
Cellulase aus *T. reesei* (6 U/mg) (Fa Sigma).
Cellulase aus *T.reesei* (10,4 U /mg (Fa. Sigma)

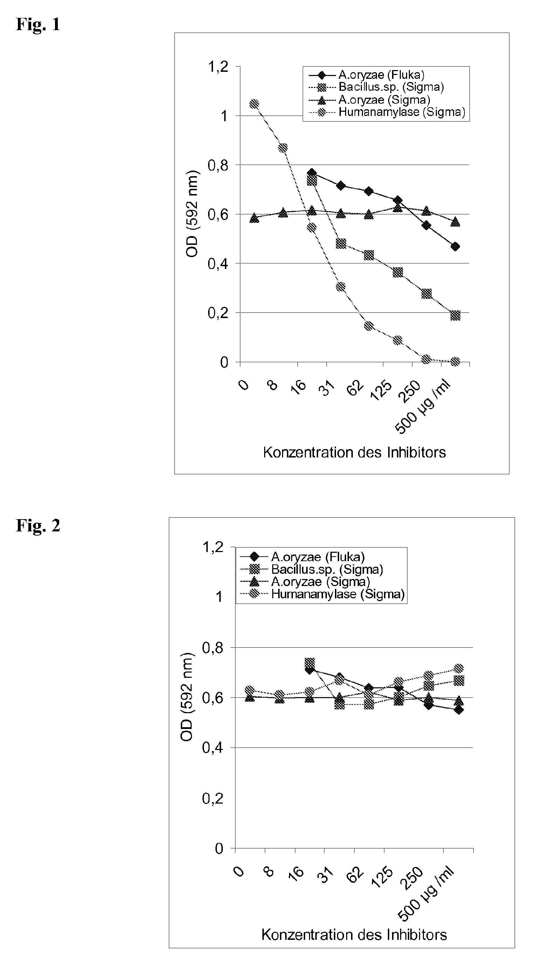

Wie in Figur 1 zu erkennen ist, hemmt der Amylase-Inhibitor AI-1 die Humanspeichelamylase, gegen die der Inhibitor entwickelt wurde, mit einer Konzentration von 250 µg/ml vollständig, während die Bacillus-Amylase zwar durch 0,5 mg/ml ebenfalls gehemmt, jedoch durch diese Konzentration nicht total ausschaltet wird. Auffällig ist, dass die beiden Aspergillus-Amylasen nicht oder nur sehr schwach beeinflusst werden.

Unerwartet war, dass der Amylase-Inhibitor AI-2 weder die Humanamylase noch die verwendeten käuflichen Amylasen aus Bakterien bzw. Pilzen hemmt, wie aus Figur 2 hervor geht. Wichtig ist an dieser Stelle zu betonen, dass insbesondere bei den Amylase-Inhibitoren ein höherer Grad an Spezifität beobachtet wurde (ZECHARIA M. 1989; MADARIAGA H. et al., 1988).

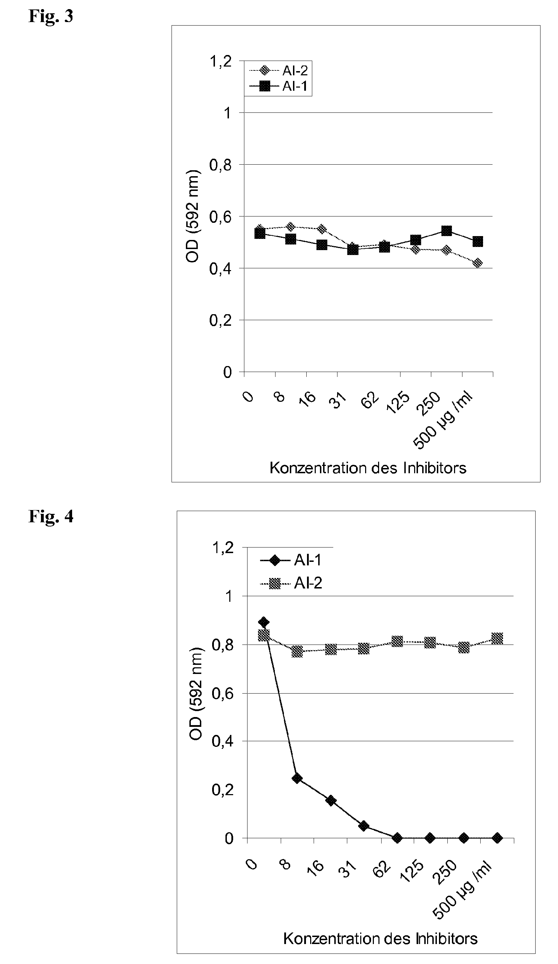

Während der Cellulase-Inhibitor bei höheren Konzentrationen auch die Amylasen des *Fusarium*-Kulturfiltrates hemmt, konnte ein solcher Effekt nicht umgekehrt für die Amylase-Inhibitoren auf die Cellulasen von *Trichoderma reesei* beobachtet werden (Fig. 3).

Eine entscheidende Beobachtung war, dass die Amylasen aus Kulturfiltrat (Strohextrakt) von *in vitro* angezogenem *Fusarium graminearum* durch den Inhibitor AI-1 bei 0,06 mg/ml total gehemmt wurden. Schon bei einer Konzentration von nur 5 µg/ml werden sie bis auf 28% reduziert. (s. Figur 4).

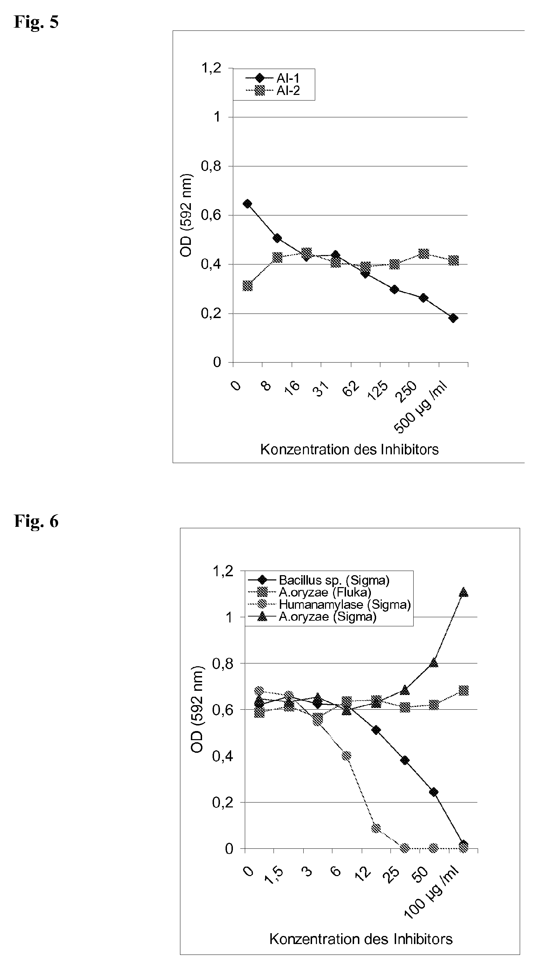

Die Amylasen von mit *F. graminearum* infizierten Pflanzen werden durch den Inhibitor AI-1 bei einer Konzentration von 0,5 mg/ml bis auf 69,2% gehemmt, aber nicht total ausgeschaltet (s. Figur 5). Auch in diesem Fall ist der Inhibitor AI-2 wirkungslos.

Eine Prüfung der Hemmbarkeit käuflicher Amylasen durch den Cellulase-Inhibitor CI ergab, dass die Human-Amylase bei einer Konzentration von 25 µg/ml und die Bacillus-Amylase bei 100 µg/ml total gehemmt werden (s. Figur 6).

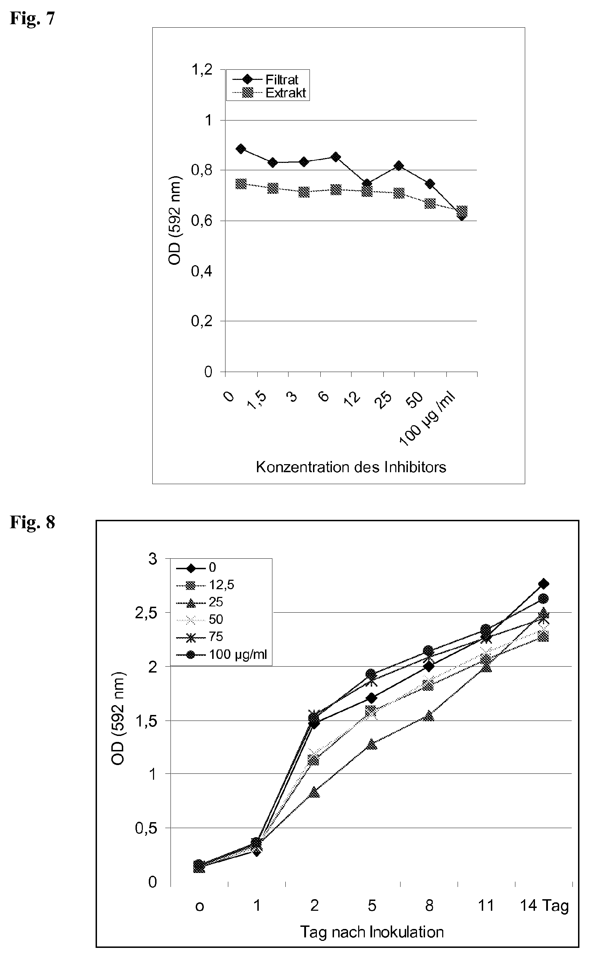

Figur 7 zeigt, dass der Cellulase-Inhibitor CI die Amylasen aus dem Kulturfiltrat und solche aus mit *Fusarium graminearum* infizierten Weizenpflanzen nicht bzw. nur unwesentlich hemmt.

### Ergebnis

Der Amylase-Inhibitor AI-1 zeigt für *Fusarium graminearum* eine klassische Hemmkurve, wie sie auch in der Literatur für Humanamylasen gezeigt wurde (ARNUBIO et al., 2008).

Dies berechtigt zu der Annahme, dass sich auf diese Weise auch das Wachstum des Pilzes hemmen lässt.

Ohne Wirkung gegen alle getesteten Enzyme war dagegen der Amylase-Inhibitor AI-2, der auch die Amylasen von *Bacillus sp*., die der beiden *Aspergillus*-Arten und die Humanamylase nicht zu hemmen vermochte.

Eine starke, wenn auch nicht vollständige Hemmung zeigte der Inhibitor AI-1 auch gegen die Amylasen des Extraktes infizierter Pflanzen, AI-2 hatte, wie zu erwarten, keine Wirkung auf die Amylasen der Pflanzenextrakte.

Unerwartet war dagegen, das der Cellulase-Inhibitor auch die Amylasen von *Bacillus spec.* und die Humanamylase bei höherer Konzentration hemmte, während die der Pilze *Aspergillus orycae* und *Fusarium graminearum* des Kulturfiltrats oder des Extraktes infizierter Blätter unbeeinflusst blieben.

### Beispiel 2

### Einfluss der Inhibitoren auf das Wachstum von Fusarium graminearum in vitro

Die folgenden Versuche wurden durchgeführt, um zu prüfen, ob die Enzym-Inhibitoren auch in der Lage sind, das Pilz-Wachstum *in vitro* zu inhibieren.

Dazu wurde das synthetische Czapek-Dox-Medium verwendet, von dem die Saccharose durch Stärke bzw. Cellulose als alleiniger C-Quelle ersetzt wurde. Dabei musste ausgeschlossen werden, dass die Inhibitoren eine unspezifische Wachstumshemmung verursachen.

### Pilzwachstum auf Kulturmedien mit unterschiedlichen C-Quellen in Gegenwart der Inhibitoren

Hierzu wurden das synthetische Czapek-Dox-Medium mit Stärke bzw. Cellulose als alleinige C-Quelle verwendet. Der Hemmeffekt der Inhibitoren wurde im Vergleich mit dem normalen Czapek-Dox-Medium mit Saccharose als C-Quelle ermittelt. Nach Vorversuchen erwiesen sich folgende Medien als optimal:

### Czapek-Dox Medium

| | |
|---|---|
| Natriumnitrat | 2 g |
| Natriumchlorid | 0,5 g |
| Magnesiumsulfat | 0,5 g |
| Kaliumsulfat | 0,35 g |
| Eisen (II) Sulfat | 0,01 g |
| Agua bidest. 1000 ml | |
| pH 6,5 | |
| optionale C-Quellen : | Saccharose 15 g |
| CM-Cellulose 5 g | |
| Lösl. Stärke 5 g | |

### Pilzwachstum in Mikrotiterplatten

Für alle Experimente außer ELISA wurden Mikrotiterplatten der Fa. SARSTEDT, Nümbrecht, verwendet. Die Platten wurden mit 100 µl des jeweiligen Nährmediums (siehe oben) mit unterschiedlichen Inhibitorkonzentrationen wie unten angegeben befüllt. Die Sporendichte betrug in allen Fällen 1,6 x 10⁵ Konidien /ml. Jeder Versuch wurde dreimal wiederholt.

| | |
|---|---|
| Kontrolle | 3 Kavitäten/Verdünnungsstufe mit jeweils 100 µl Sporensuspension in Aqua bidest. |
| | +100 µl x2 CD - Saccharose, CD - CM-Cellulose oder Stärke |
| Testansatz | 3 Kavitäten/Verdünnungsstufe mit jeweils 100 µl Sporensuspension in AI-1, AI2 oder CI |
| | +100 µl x2 CD - Saccharose, CD - CM-Cellulose oder Stärke |

Die inokulierten Platten wurden anschließend mit Hilfe des Photometers gemessen und dann im Brutschrank bei 25°C inkubiert. Weitere Messungen erfolgten täglich zur gleichen Zeit bis 14 Tage nach Inokulation.

### Einfluss des Cellulase-Inhibitors auf das Wachstum von Fusarium graminearum

Aus Figur 8 geht hervor, dass das Wachstum von *Fusarium graminearum* auf Saccharose als alleiniger C-Quelle über 14 Tage durch den Cellulase-Inhibitor CI bei unterschiedlichen Konzentrationen nicht gehemmt wird.

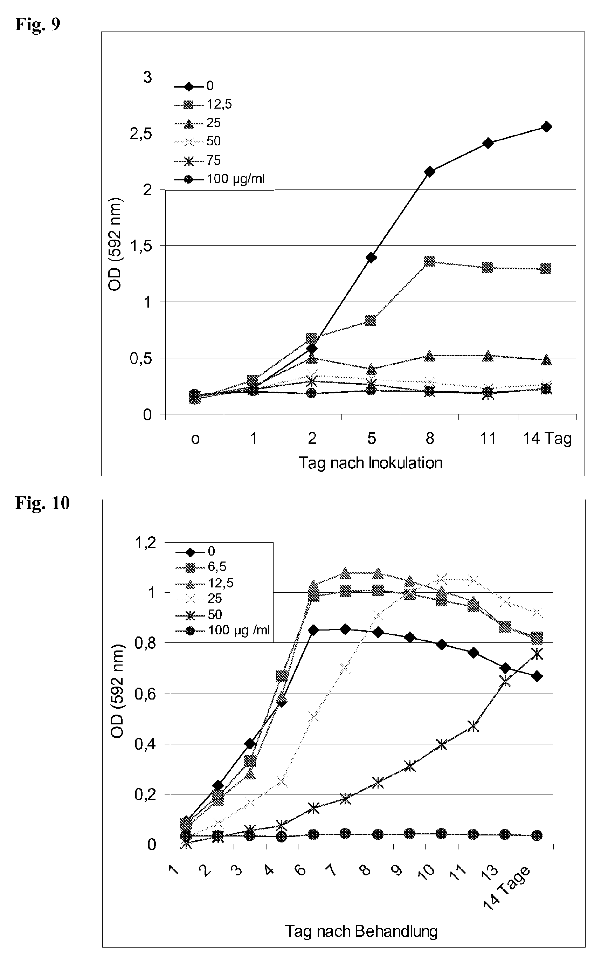

Dort aber, wo Cellulose als C-Quelle eingesetzt wurde, war eine Hemmung des 14-tägigen Pilzwachstums zu beobachten. Schon bei einer Inhibitorkonzentration von 12,5 µg/ml war eine deutliche Wachstumsdepression zu erkennen, die ab 50 bis 100 µg/mL 100% betrug (s. Figur 9).

Bei Stärke als alleiniger C-Quelle (s. Figur 10) wurde der Pilz durch den Cellulase-Inhibitor CI ebenfalls gehemmt, allerdings erst ab 75 µg/ml partiell und total erst ab 100 µg/ml. Niedrigere Konzentrationen von 6,5-12,5 µg/ml bewirkten sogar eine verifizierbare Wachstumsförderung.

### Einfluss des Amylase-Inhibitors All auf das in vitro Wachstum von Fusarium graminearum

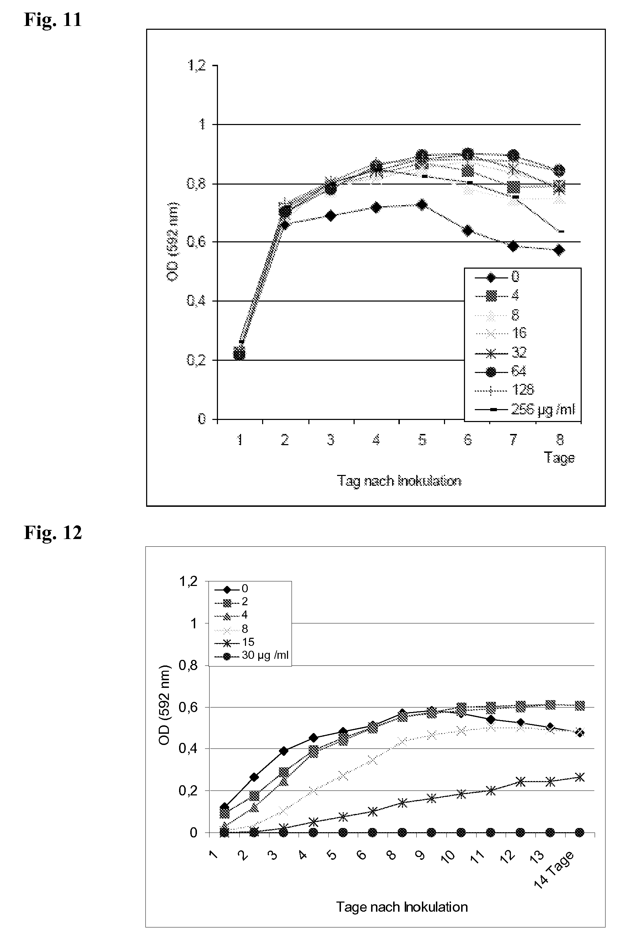

In gleicher Weise wie der Cellulase-Inhibitor CI hat auch Amylase-Inhibitor AI-1 keinen negativen Einfluss auf das Pilzwachstum in Czapek-Dox Medium mit Saccharose als alleiniger C-Quelle. Verifiziert durch mehrfache Wiederholung kann festgestellt werden, dass das Wachstum durch den Inhibitor sogar gefördert wurde (s. Figur 11).

Bei Wachstum des Pilzes in einem Medium mit Stärke als alleiniger C-Quelle wird er schon bei einer relativ niedrigen Konzentration des Amylase-Inhibitors AI-1 von 15 µg/ml bereits zu ca. 50% gehemmt (s. Figur 12). Die Hemmung ist total bei einer Konzentration von 30 µg/ml und damit um den Faktor 3 effektiver als der Cellulase-Inhibitor gegenüber Stärke als Substrat.

### Einfluss des Amylase-Inhibitors (AI2) auf das Wachstum von Fusarium graminearum

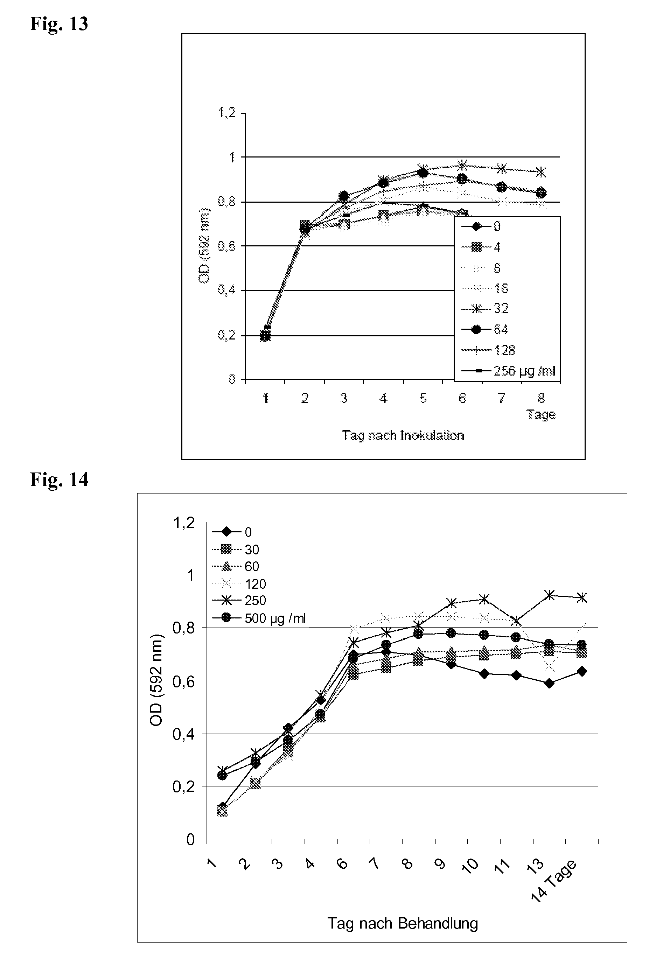

Im Gegensatz zum Enzyminhibitor AI-1 und CI, hat der Amylase-Inhibitor AI-2 keinen Einfluss auf das Pilzwachstum, weder im Czapek-Dox Medium mit Saccharose als C-Quelle noch im Medium mit Stärke als alleiniger C-Quelle (s. Fig.13 und 14).

### Ergebnis

Es konnte ausgeschlossen werden, dass alle verwendeten Inhibitoren beim Wachstum von *F. graminearum* auf Saccharose als alleiniger C-Quelle, d.h. "unter Normalbedingungen", einen toxischen Effekt zeigten.

Eindeutig nachzuweisen war eine erwartete Wachstumshemmung durch den Celluase - Inhibitor auf dem synthetischen Nährmedium Czapek-Dox mit Cellulose als alleiniger C-Quelle. Bereits bei einer Konzentration von 12,5 µg/ml war die Wachstumsrate um ca. 50 % reduziert und bei 50 µg/ml total gehemmt.

Wie bereits die Hemmversuche mit der *in vitro* von *Fusarium* produzierten Amylase gezeigt hatten, wurde auch das Wachstum des Pilzes auf einem Stärke-Medium durch den Cellulase-Inhibitor gehemmt, wenn auch die für eine vollständige Hemmung erforderliche Konzentration mit 100 µg/ml höher war.

Der Amylase-Inhibitor AI-2 konnte weder die im Handel erhältlichen Amylasen bzw. Cellulasen der verschiedenen Mikroorganismen noch die von Fusarium graminearum *in vitro* oder in der Pflanze gebildeten Amylasen inhibieren. Deshalb war es folgerichtig, dass AI-2 auch auf das Wachstum des Pilzes *in vitro* keinerlei hemmenden Einfluss hatte.

### Beispiel 3

### Einfluss der Amylase und Cellulase-Inhibitoren auf die Infektion von Weizenpflanzen mit Fusarium graminearum unter Gewächshausbedingungen

### Korrelation zwischen Cellulaseaktivität und der mit dem ELISA ermittelten Pilzmenge (Fusarium-Protein-Äquivalenten) in mit F. graminearum befallenen Weizenpflanzen

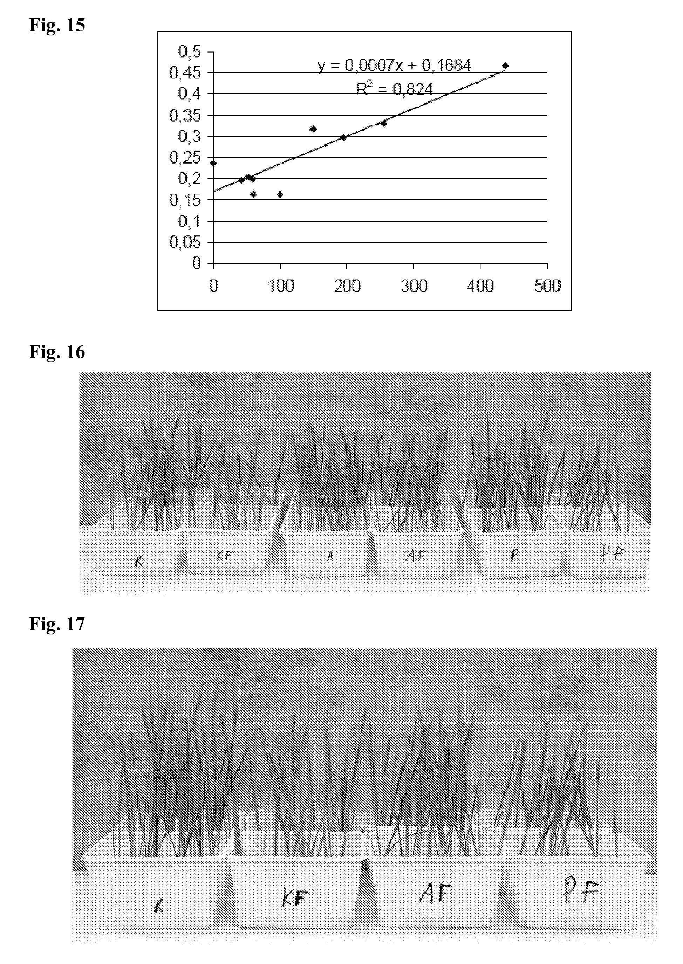

Obwohl seit langem bekannt ist, dass zwischen der Aktivität von Schlüsselenzymen der Pathogenese wie Cellulasen, Xylanasen und Proteasen phytopathogener Pilze und ihrer Mycelmenge oder Befallsstärke eine enge Beziehung besteht, wurde sie am System *Fusarium graminearum* und Weizen noch einmal überprüft. Auch in diesem Fall beweist die hohe Korrelation von R² = 0,824 eine solche enge Beziehung (s. Figur 15).

### Einfluss der Inhibitoren auf den Fusarium graminearum Befall infizierter Weizenjungpflanzen bei Wachstum auf Faltfilter

Nachdem eine 100%ige Wachstumshemmung des Pilzes, als auch eine Inaktivierung pilzlicher Enzyme aus Pflanzenextrakten durch Amylase- und Cellulase-Inhibitoren erreicht wurde, war die entscheidende Frage, inwieweit eine Hemmung des Pilzwachstums auch in der Pflanze möglich ist. Hierzu wurden die Inhibitoren über die Samen durch 24stündiges Imbibieren appliziert. Dadurch sollte ein Schutz gegen eine Infektion der Keimlinge durch den samenbürtigen Pilz oder bei Inokulation der Pflanzen durch eine äußere Inokulum-Quelle erreicht werden. Ein Befall der Wurzel und Basis von Getreidepflanzen mit *Fusarium graminearum* bewirkt eine Reduktion des Pflanzenwachstums wie es in Figur 16 bzw. Fig. 17 zu beobachten ist. Aus diesem Grunde kann als ein Kriterium für die Stärke des Befalls mit Fusarium das Frischgewicht der Pflanzen herangezogen werden.

### Faltfilterversuche

Die Gewinnung des *Fusarium*-Inokulums erfolgte wie obenstehend beschrieben. Die Behandlung der Weizenkörner mit jeweiligem Inhibitor erfolgte wie obenstehend beschrieben.

Die Beimpfung fand unter sterilen Bedingungen statt. Die mit *F. graminearum* zu beimpfenden Körner der jeweiligen Behandlung wurden in einem kleinen Sieb eine Minute in die Sporensuspension getaucht und kurz zum Abtropfen stehengelassen. Genauso wie bei den nicht infizierten Kontrollen, wurden die Körner dann auf das Faltfilter gebracht, das sich in einer Quarkbox (9,5 x 9,5 x 6 cm) befand. Um eine ausreichende und gleichmäßig verteilte Feuchtigkeit gewährleisten zu können wurde das Faltfilter auf eine quadratische Unterlage aus Filterpapier gelegt. In jeder der insgesamt 5 Boxen wurden 4 x 5 Weizenkörnerreihen ausgelegt. Das entspricht 100 Körnern per Behandlung.

In einem Versuch mit auf Faltfilter angezogenen Weizenjungpflanzen lässt sich bereits auf der Basis des Frischgewichtes einmal der negative Effekt einer Inokulation mit *Fusarium graminearum* erkennen, zum anderen kommt der starke befallreduzierende Effekt des Amylase-Inhibitors AI-1 und des Cellulase-Inhibitors CI zum Ausdruck (s. Figur 16 und 17 sowie Figur 18).

Es war im Falle aller *ad planta* Versuche nicht möglich, die Effekte des Amylase-Inhibitors AI2 zu prüfen, da er die Keimung der Weizenpflanzen so stark hemmte, dass sich Jungpflanzen nicht entwickeln konnten.

### Quantitativer Nachweis von F. graminearum in infizierten Weizenjungpflanzen auf Faltfilter mit Hilfe des ELISA

Typisch für eine Infektion junger Weizenpflanzen mit *F. graminearum* ist das Fehlen sichtbarer Symptome, sodass zum quantitativen Pilz-Nachweis molekularbiologische Methoden herangezogen werden müssen, um zu klaren Aussagen zu kommen. Hierzu bietet sich u.a. ein für *Fusarium*-Arten spezifischer, quantifizierender ELISA an.

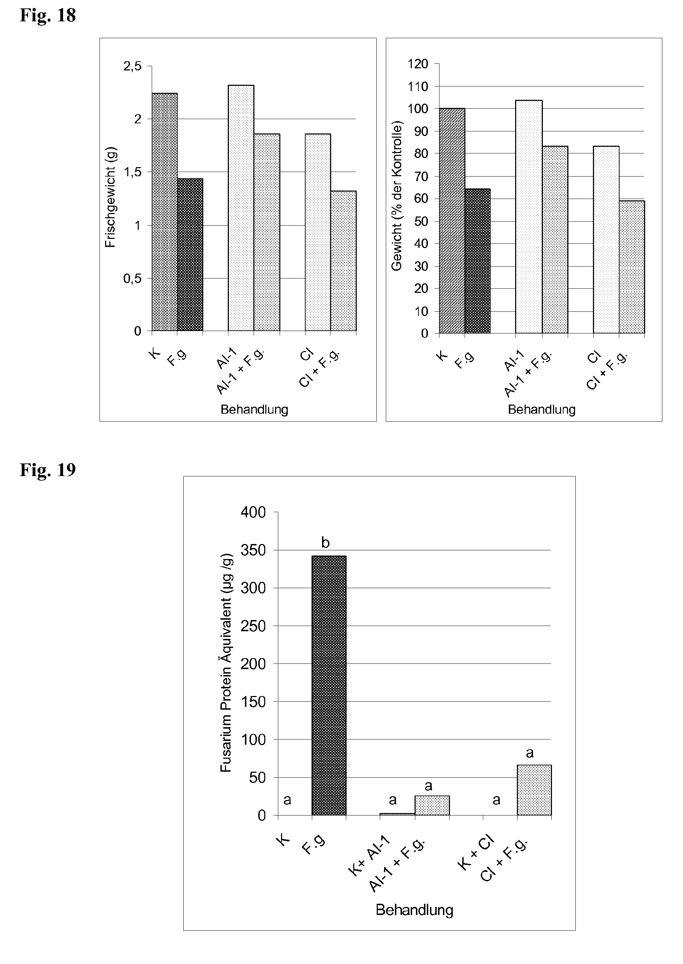

Für die Versuche *ad planta* auf Faltfilter ergab eine Quantifizierung des Befalls mit dem ELISA, dass der Amylase-InhibitorAI-1 den Pilz in den oberirdischen Teilen der Pflanze zu 92% und der Cellulase-Inhibitor CI zu 89%, statistisch abgesichert (s. Tabelle 1), hemmte (s. Figur 19).

**Tab. 1: Statistische Absicherung der Effekte des Amymlase-Inhibitors AI-1 und des Cellulase-Inhibitors CI auf den Befall mit F. graminearum infizierter und nicht infizierter Weizenjungpflanzen auf Faltfilter 2 Wochen nach Aussaat. K = nicht infiziert, F.g. = mit Fusarium graminearum infiziert, K + AI-1 nicht infiziert + Inhibitor AI-1, K + AI-1 = nicht infiziert + Inhibitor AI-1, AI-1 + F.g. = infiziert + AI-1 behandelt, K + CI = nicht infiziert + Inhibitor CI, CI + F.g. = infiziert + Cellulase-Inhibitor CI.**

| **Variante** | **Anzahl Wiederholungen** | **Fusarium Protein Equivalent** **(µg/g),** **Mittelwert** | **Homogene Gruppen** |
|---|---|---|---|
| **Kontrolle** | 5 | 0,0 | a |
| **K** + **CI** | 5 | 0,04 | a |
| **K** + **AI-1** | 5 | 2,2 | a |
| **F.g.** + **AI-1** | 5 | 25,2 | a |
| **F.g** + **CI** | 5 | 66,34 | a |
| **F.g.** | 5 | 341,44 | b |

| | | | |
|---|---|---|---|
| Methode: 95,0 % Tukey HSD, Mittelwerte mit gleichen Buchstaben unterscheiden sich nicht signifikant. | | | |

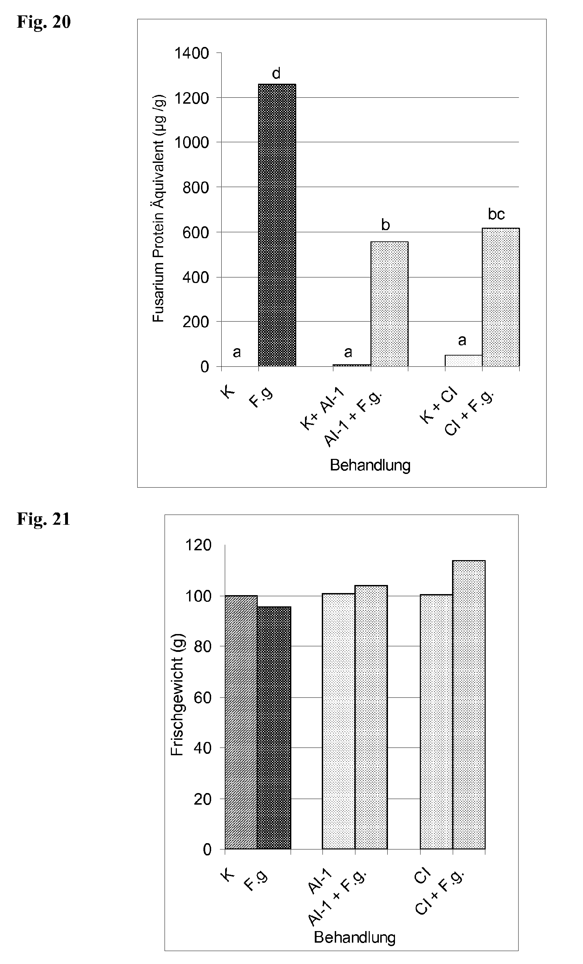

Im Unterschied zu den oberirdischen Pflanzenteilen sind die Pilzmengen in den Wurzeln der auf Faltfilter angezogenen Pflanzen um den Faktor 4 höher. Damit könnte auch erklärt werden, warum die Wirksamkeit der Inhibitoren mit 66% Reduktion im Falle des Amylase-Inhibitors AI-1 und mit 51% im Falle des Cellulase-Inhibitors im Vergleich zu den oberirdischen Pflanzenteilen geringer war (s. Figur 20 bzw. Tabelle 2).

**Tab. 2: Statistische Absicherung der Effekte des Amymlase-Inhibitors AI-1, und des Cellulase-Inhibitors CI auf den Befall infizierter und nicht infizierter Wurzeln auf Faltfilter mit F. graminearum 2 Wochen nach Aussaat. K =nicht infiziert, F.g. = mit Fusarium graminearum infiziert, K + AI-1 nicht infiziert + Inhibitor AI-1, K + AI-1 = nicht infiziert + Inhibitor AI-1, AI-1 + F.g. = infiziert + AI-1 behandelt, K + CI = nicht infiziert + Inhibitor CI, CI + F.g. = infiziert + Cellulase-Inhibitor CI.**

| **Variante** | **Anzahl Wiederholungen** | **Fusarium Protein Equivalent** **(µg /g),** **Mean** | **Homogene Gruppen** |
|---|---|---|---|
| **Kontrolle** | 5 | 1,0 | a |
| **K** + **AI-1** | 5 | 6,3 | a |
| **K** + **AI-2** | 5 | 7,6 | a |
| **K** + **CI** | 5 | 49,0 | a |
| **F.g.** + **AI-1** | 5 | 554,8 | b |
| **F.g** + **CI** | 5 | 618,9 | bc |
| **F.g.** + **AI-2** | 5 | 813,0 | c |
| **F.g.** | 5 | 1261,2 | d |

| | | | |
|---|---|---|---|
| Methode: 95,0 % Tukey HSD, Mittelwerte mit gleichen Buchstaben unterscheiden sich nicht signifikant. | | | |

### Ergebnis

Auf den Fotos der Jungpflanzen (Fig. 16 und Fig. 17) ist zu erkennen, dass bei Keimung und Wachstum auf Faltfilter nach direkter Applikation einer Sporensuspension unter sehr hohem Infektionsdruck die mit AI-1 behandelten, infizierten Pflanzen im Gegensatz zur infizierten Kontrolle fast normal aussehen. Bei Applikation von CI sehen die Pflanzen zwar grüner aus, sind aber im Wuchs doch deutlich reduziert. Der positive Effekt von AI-1 und auch die Unwirksamkeit von CI wurde durch einen Vergleich der Frischgewichte bestätigt.

Sehr deutlich wird der Effekt der Inhibitoren bei Betrachtung des über den ELISA ermittelten Pilzgehaltes in den infizierten Blättern. Sowohl AI-1 als auch CI reduzierten die Pilzgehalte um ca. 90%, trotz des unter diesen Bedingungen relativ hohen Befallsdruck.

Wesentlich geringer war die Wirksamkeit der Inhibitoren dagegen beim Wurzelbefall. Hier erreichten AI-1 und CI nur eine Befallsreduktion von 61% bzw. 51%. Dabei ist jedoch zu berücksichtigen, dass der Befallsdruck an den Wurzeln vierfach höher lag als in den Blättern. Die Unterschiede zwischen Blatt und Wurzelbefall sowie die Unterschiede im Blattbefall der Behandlungsvariante deuten darauf hin, dass die Inhibitoren möglicherweise transportiert werden, oder aber eine sehr effiziente Barriere für die Ausbreitung des Pilzes in der Pflanze darstellen.

### Beispiel 4

### Einfluss der Inhibitoren auf den Fusarium graminearum Befall infizierter Weizenpflanzen bei Wachstum in Erdsubstrat.

### Bodeninokulation mit Fusarium graminearum über Weizenstroh

Zwölf 11-Kolben wurden jeweils mit 6 g unbehandeltem Weizenstroh (Partikelgröße = 4 mm) in 200 ml Aqua bidest. über Nacht stehengelassen und dann autoklaviert. Die Einwirkung über Nacht ermöglicht das optimale Eindringen des Pilzes nach der Inokulation.

Die jeweiligen Kolben wurden mit einem mit *Fusarium graminearum* bewachsenen Agarstückchen (∅ = 5 mm) beimpft und auf einem Schüttler bei Dunkelheit und einer Temperatur von 20°C inkubiert. Während der Inkubationszeit wurden Stichproben auf mikrobielle Verunreinigungen mikroskopisch untersucht.

Vier Wochen nach der Beimpfung mit dem Pilz wurde die Wasser-Strohsuspension durch ein grobporiges Filterpapier (Rundfilter. 90 mm, Schleicher & Schuell. Dassei) gefiltert. Das Stroh wurde abgefangen und dann mit dem Boden gemischt.

### Bodenvorbereitung

10 kg Boden (1:2 Sand/Feldboden) wurden mit 72 g wie oben vorbereiteten infizierten Stroh sorgfältig gemischt. Weitere 10 kg Boden (1:2 Sand/Feldboden) wurden mit 72 g nicht infiziertem aber autoklaviertem Stroh gut gemischt. Beide Bodenbehandlungen wurden je in 30 Töpfe (9x9 cm) verteilt.

### Weizenkörnerbehandlung

Ungefähr 100 unbehandelte Weizenkörner (Sorte Ellvis) wurden in der jeweiligen Inhibitorlösung für 12 Stunden ganz eingetaucht. Fast 300 Körner wurden 12 Stunden lang nur mit Agua bidest. bedeckt. Danach wurden 9 Körner pro mit Boden vorbereitetem Topf (s.o.), mit 10 Wiederholungen eingesät.

Jeweils 100 mg des Amylaseinhibitors (AI-1) und des Amylaseinhibitors (AI-2) wurden in 100 ml Agua bidest. aufgelöst. Das entspricht einer Konzentration von 1 mg /ml Amylaseinhibitor (AI-1) oder Amylaseinhibitor (AI-2). Natriumhexachlor-Cellulaseinhibitor ( CI ) wurde mit einer Konzentration von 100µg /ml hergestellt. Daraus resultierten folgende Varianten für den jeweiligen Inhibitor:

| | |
|---|---|
| 5 Töpfe weder mit Inhibitor noch mit Pilz | = K |
| 5 Töpfe ohne Inhibitor aber mit Pilz | = K + F.g. |
| 5 Töpfe mit Inhibitor und ohne Pilz | = K + AI-1, AI-2 oder CI |
| 5 Töpfe behandelt mit Inhibitor und Pilz | = K + F.g. + AI-1, AI-2 oder CI |

Die Weizenpflanzen wurden nach einem Monat geerntet und die Wirkung des jeweiligen Inhibitors durch ELISA- Test untersucht.

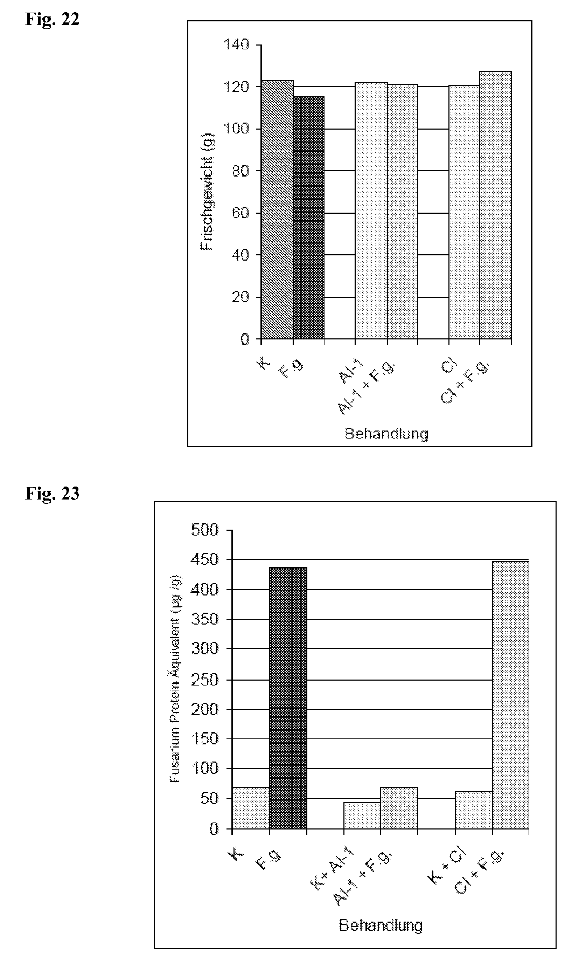

Erwartungsgemäß ist auch in Erdsubstrat unter Gewächshausbedingungen eine Gewichtsreduzierung bei den mit *Fusarium* inokulierten Weizenpflanzen gegenüber den nicht befallenen Kontrollen zu beobachten (s. Figur 21 und 23). Der Amylase- Inhibitor AI-1 hebt diese Frischgewichtsdepression auf, was darauf hindeutet, dass der Pilz durch den Inhibitor gehemmt wird. Ein negativer Einfluss des Inhibitors auf das Pflanzenwachstum generell ist nicht festzustellen (s. Figur 21, 22).

Überraschend war, dass der Cellulaselnhibitor CI das Pilzwachstum unter diesen Bedingungen im Vergleich zu den auf Faltfilter angezogenen Pflanzen nicht hemmt.

### Quantitativer Nachweis von F. graminearum in infizierten Weizenjungpflanzen in Erdsubstrat mit Hilfe des ELISA

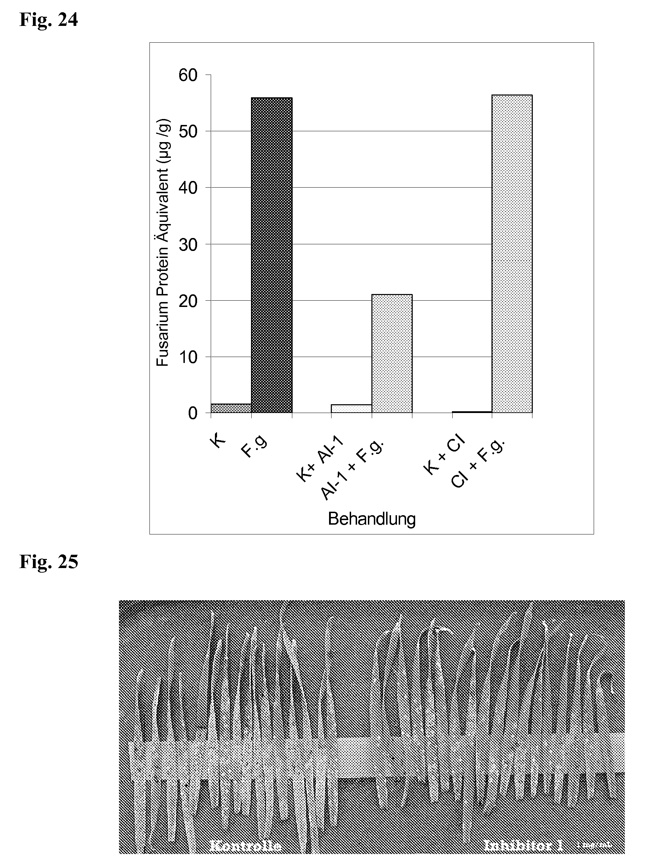

In Figur 23 und Figur 24 kommt der relativ hohe Befall der 4 Wochen alten Pflanzen klar zum Ausdruck. Dagegen bewirkte eine 24-stündige Tauchbehandlung des Saatgutes mit dem Amylase-Inhibitor AI-1 im Vergleich zur entsprechenden mit AI-1 behandelten Kontrolle in Versuch 1 eine vollständige Hemmung (Kontrolle) (s. Figur 23), in Versuch 2 nur eine Hemmung des Pilzwachstums um 60% (s. Figur 24). In beiden Versuchen kommt klar zum Ausdruck, dass der Cellulase-Inhibitor CI den Pilz unter diesen Bedingungen im Unterschied zu den Faltfilter-Versuchen nicht hemmt.

### Ergebnis

Die Ergebnisse der Topfversuche unterschieden sich erheblich von denen auf Faltfilter. Hier erreichten die mit AI-1 behandelten infizierten Pflanzen das gleiche Frischgewicht wie die nicht infizierte Kontrolle.

Betrachtet man dagegen die mit dem ELISA nachgewiesene Pilzmenge in den Pflanzen, so lässt sich im Unterschied zu den Versuchen auf Faltfilter keinerlei Effekt durch den Cellulase-Inhibitor CI nachweisen. Eine zweifelsfreie Deutung hierfür lässt sich nicht finden. Denkbar wäre, dass bei einer vergleichsweise längeren Keimung der Inhibitor CI teilweise aus dem Korn heraus diffundiert und an Bodenpartikel gebunden oder durch Bodenmikroorganismen abgebaut wird, so dass nur noch eine suboptimale Menge zur Verfügung steht. Der Amylase-Inhibitor AI-1 dagegen wirkt ähnlich gut wie im Faltfilterversuch mit einer Reduktion der Pilzmenge zwischen 66% im ersten und 85% im 2. Versuch.

Wichtig für die Deutung der Ergebnisse ist, dass der Cellulase-Inhibitor auch Amylasen und darüber hinaus nicht nur das Wachstum von *Fusarium graminearum* auf Cellulose sondern auch auf Stärke zu hemmen vermochte (vgl. Fig. 10, 11, 14). Damit muss dieser Inhibitor als partiell unspezifisch angesehen werden.

Als wichtigstes Ergebnis muss die Tatsache angesehen werden, dass durch Applikation von Inhibitoren der als essentiell anzusehenden extrazellulären stärke- und celluloseabbauenden Enzyme *ad planta* eine Besiedlung der Wirtspflanze prinzipiell verhindert werden kann. Dies ist in dieser Form bisher noch nicht gezeigt worden. Unerwartet in diesem Zusammenhang ist, dass nicht, wie zunächst zu erwarten war, die Enzyme der Pflanze, insbesondere die Amylasen, ebenfalls inhibiert werden. Bedenkt man die essentielle Rolle der pflanzeneigenen Amylase während der Keimung (ROSEMARIE et al., 1991; MARCHYLO et al., 1976; WESELAKE et al. 1985; MYUKI, et al., 2002), so überrascht, dass weder der Amylase-Inhibitor AI-1 noch der amylasehemmende Wirkung zeigende Cellulose-Inhibitor die Keimung und das Pflanzenwachstum hemmten.

### Beispiel 5

### Einflüsse von Amylase- und Cellulaseinhibitoren auf Blumeria graminis f. sp. tritici

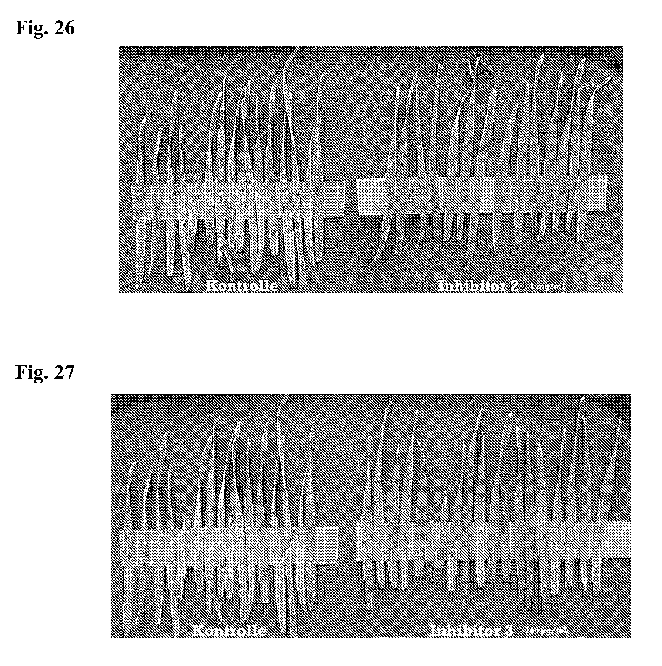

Nach einer Sprühbehandlung der Weizenpflanzen im 3-Blatt-Stadium und anschließender Inokulation (nach Abtrocknen) mit Mehltau *Blumeria graminis f. sp. tritici* sind eindeutige Hemmeffekte zu erkennen (Figur 25-27). Eine Bonitur nach MOLL et al. (1996) ergab für den Amylase-Inhibitor AI-1 eine Befallsreduktion von 60% auf 7%, für den Amylase-Inhibitor AI-2 auf 1 % und für den Cellulase-Inhibitor CI auf 10% (Tabelle 3).

**Tab. 3: Bonitur des Mehltaubefalls (Blumeria graminis f. sp. tritici) nach MOLL et al. (1996) 7 dpi.**

| | Befall (%) |
|---|---|
| **Kontrolle** | 60 |
| **AI- 1** | 7 |
| **AI- 2** | 1 |
| **CI** | 10 |

### Ergebnis

AI-2 verminderte den Mehltaubefall mit einer Befallsreduktion von 60% der Kontrolle auf 1% in starkem Maße. Auch die beiden anderen Amylase-Inhibitoren verminderten den Befall auf 7% im Falle von AI-1 und 10% im Falle von CI. Eine Erklärung des Hemmeffektes aller Inhibitoren im Falle des Mehltau-Pilzes könnte zwar im Falle des Cellulase-Inhibitors mit der Hemmung der für die Penetration dieses biotrophen Pilzes erforderlichen extrazellulären Cellulase erklärt werden, kommt aber für eine Hemmung einer pilzlichen Amylase sicher nicht in Frage, da für diesen biotrophen Pilz extrazelluläre Amylasen nicht beschrieben wurden. Soweit bekannt, wird *Blumeria graminis f.sp. tritici* von der Pflanze mit niedermolekularen Nährstoffen versorgt, da er durch das System der extrahaustorialen Membran von der Wirtspflanze abgegrenzt ist. Denkbar ist, dass der Abbau von Glykogen als wichtiger interner Reservestoff der Mehltausporen durch die hier verwendeten Inhibitoren unterbunden wird.

Im Unterschied zu den Inhibitoren AI-1 und CI, die keinerlei negativen Effekt auf das Pflanzenwachstum zeigten, hemmt der Amylase-Inhibitor AI-2 nach Inbibition in einer Lösung von 1 mg/ml die Keimung der Weizenpflanzen und Erbsen vollständig, hat aber keinen Einfluss auf das ausgewachsene Blatt, wie Versuche mit dem Weizenmehltau *Blumeria graminis f. sp. tritici* zeigten.Aus der Keimungshemmung von Pflanzen kann geschlossen werden, dass dieser Hemmstoff die pflanzeneigene Amylase hemmt.

Der sehr gute Hemmeffekt dieses Inhibitors auf *Blumeria graminis f. sp. tritici* andererseits zeigt, dass selbst eine partielle Hemmwirkung auf die Pflanze einen möglichen Einsatz gegen bestimmte Erreger ausgewachsener Pflanzen grundsätzlich erlaubt.

Eine Erklärung für die unterschiedlichen Effekte von AI-1 und AI-2 könnten, ohne sich auf irgendeine Theorie zu beschränken, mit dem unterschiedlichen Wirkmechanismus erklärt werden. So hemmt AI-2 nicht nur die Amylasen sondern auch andere Glucosidasen, d.h. greift offensichtlich in andere essentielle Stoffwechselreaktionen ein, womit auch die Keimungshemmung von Pflanzen erklärt werden könnte (ROSEMARIE et al., 1990; MARCHYLO et al., 1976; WESELAKE et al., 1985; MYUKI et al., 2002.

In Anbetracht der Ergebnisse kann festgestellt werden, dass die untersuchten Inhibitoren eine Einsatzmöglichkeiten als Inhibitoren extrazellulärer Hydrolasen im Pflanzenschutz darstellen.

### LITERATURVERZEICHNIS

DE-A 2 347 782
DE-A 2 614 393
DE-A 2 855 409
DE-A 3 123 520
DE-A 23 47 782

US 4,175,123
US 4,197,292

WO 96/37494, WO 98/25923

AFSCHARI A.H. und WOLF G.A. (1992): Produktion extrazellulärer, hydrolytischer Enzyme von *Pseudocercosporella herpotrichoides* (Fron) Deighton, *Fusarium culmorum* (W.G.SM) SACC sowie *Rhizoctonia solani cerealis in vitro* bzw. *in planta* und ihre Beziehung zur Pathogenese. Mitt. Biol. Bundesanst. **283,** 248.
ARNUBIO V.J., JORGE W. A.V., und MARIA F.G. (2008): Activity of r-Amylase Inhibitors from *Phaseolus coccineus* on Digestive α-Amylases of the Coffee Berry Borer. J. Agric. Food Chem. 56, 2315-2320.
BREUER H.-W. M. (2003): Review of acarbose therapeutic strategies in the long-term treatment and in the prevention of type 2 diabetes. International journal of clinical pharmacology and therapeutics 41, 421-440.
CASPER und MAYER (1981): Die Anwendung des ELISA-Verfahrens zum Nachweis pflanzenpathogener Viren. Nachrichtenblatt Deutscher Pflanzenschutzdienst.
CLARK M.F. und ADAMS A.N. (1977): Characteristics of the microplate method of enzyme-linked immunosorbent assay for the detection of plant viruses. J. gen. Virol. 34: 475-483.
LALAOUI F., HALAMA P., DUMORTIER V., PAUL B. (2000): Cell wall-degrading enzymes produced in vitro by isolates of Phaeosphaeria nodorum differing in aggressiveness, Plant Pathology. 49(6), 727-733.
MADARIAGA H., LEE P.C., HEITLINGER L.A. und LEBENTHAL E. (1988): Effects of Graded α-Glucosidase Inhibition on Sugar Absorption in Vivo. Digestive Diseases and Sciences. 33(8), 1020-1024.
MAHMUD T. (2003): The C7N aminocyclitol family of natural products. Nat. Prod. Rep., 20, 137-166.
MARCHYLO B., KRUGER J. E. und IRVINE G. N. (1976): Cereal Chem 53: 157.
MOLL, E., U. WALTHER, K. FLATH, J. PROCHNOW, E. SACHS 1996: Methodische Anleitung zur Bewertung der partiellen Resistenz und die SAS-Anwendung. In: Ber. Biol. Bundesanst. Land- Forstwirtsch. Resistenzprüfung gegen Pilze, Bakterien und Viren Mitt. Biol. Bundesanst. Land- Forstwirtsch (2000). 373, 6-89
MYUKI K., HIRONORI I., UEGUCHI T.M., ASHIKARI M. und MATSUOKA M. (2002): The α-Amylase Induction in Endosperm during Rice Seed Germination Is Caused by Gibberellin Synthesized in Epithelium. BioScience Center, Nagoya University, Chikusa, Nagoya 464-8601, Japan.
REIGNAULT PH., VALETTE-C.O. und BOCCARA M. (2008): The importance of fungal pectinolytic enzymes in plant inavasion, host adaptability and symptom type. European Journal of Plant Pathology. ISSN 0929-1873 (Print) 1573-8469.
ROSEMARIE G., ALFRED T., ULRICH B. und JOHANNA H. (1991): Studies on the germination specific α-amylase and its inhibitor of rye (Secale cereale). Z Lebensm Unters Forsch, 192, 230-233.
SCOTT L.J., SPENCER C.M. (2000): Miglitol: A Review of its Therapeutic Potential in Type 2 Diabetes mellitus. Drugs 59,521-549.
SHULTZ M. D., LASSIG J. P., GOOCH M. G. EVANS B. R. WOODWARD J. (1995): Palladium--a new inhibitor of cellulase activities. Biochem-Biophys-Res-Commun. 209, 1046-52.
WEHMEIER U. (2004): Acarbose, ein therapeutisch eingesetzter Wirkstoff: Biosynthese und Funktion. BIOspektrum 1, 34-36.
WESELAKE R. J., MAC GREGOR A. W., HILL R. D. (1985): Cereal Chem 62:120.
WIRTH und WOLF (1990): Dye-labelled substrates for the assay and detection of chitinase and lysozyme activity. J Microbiol Methods 12: 197-205.
ZECHARIA M. (1989): The Effect of Acarbose and Miglitol (BAY-M-1099) on Postprandial Glucose Levels Following Ingestion of Various Sources of Starch by Nondiabetic and Streptozotocin-Induced Diabetic Rats. J. Nutr. 119, 2023-2029.

## Patentansprüche

1. Verwendung einer Verbindung der Formel A oder der Formel C (Acarbose oder allgemeinere Formel (A), Palladat oder allgemeinere Formel (C)) oder von agrochemischen Salzen davon als Mittel zur Bekämpfung von Pilzen oder anderen Mikroorganismen 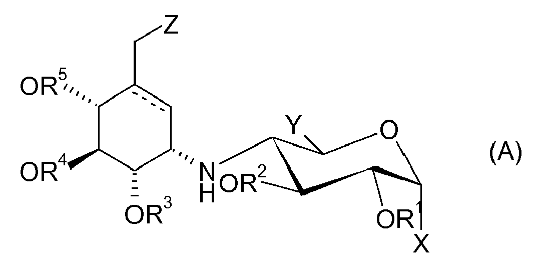 worin bedeuten:
X OH, OR⁶, SH, SR⁷, NH₂ oder NHR;
Y Alkyl-, Aryl, Alkylaryl- oder Arylalkylsubstituenten, die gegebenenfalls substituiert sein können, CH₂N₃, CH₂NH₂, CH₂NHAc, CH₂OCH₃ oder CO₂CH₃;
Z H, OH, O-C₁-C₆-Alkyl, OCH₃, OTs, OTr, OMs oder OAc;
R¹, R², R³ und R⁴ unabhängig voneinander H, Alkyl-, Aryl, Alkylaryl- oder Arylalkylsubstituenten, die gegebenenfalls substituiert sein können; Ac, Ts oder Ms;
R⁵ H, Alkyl-, Aryl, Alkylaryl- oder Arylalkylsubstituenten, die gegebenenfalls substituiert sein können, Ac, Ts, Ms oder 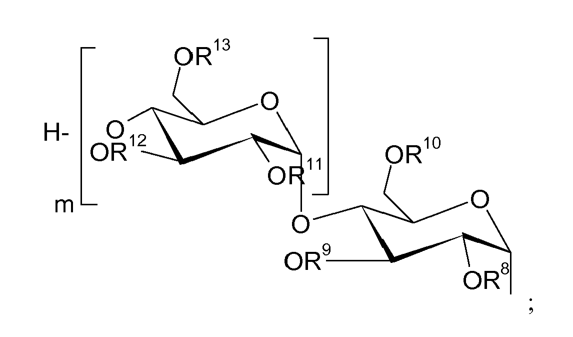
R⁶ H, Alkyl-, Aryl, Alkylaryl- oder Arylalkylsubstituenten, die gegebenenfalls substituiert sein können, Ac, Ts, Ms oder 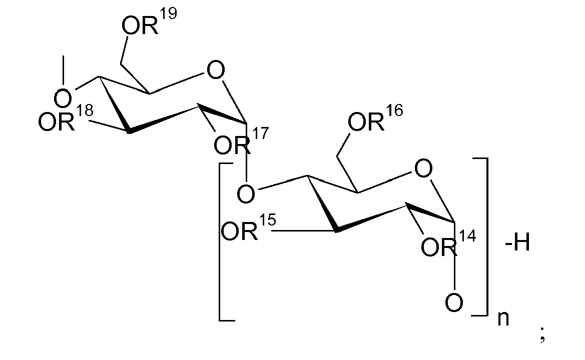
R⁸, R⁹, R¹⁰, R¹¹, R¹², R¹³, R¹⁴, R¹⁵, R¹⁶, R¹⁷, R¹⁸, R¹⁹ unabhängig voneinander H, Alkyl-, Aryl, Alkylaryl- oder Arylalkylsubstituenten, die gegebenenfalls substituiert sein können, Ac, Ts oder Ms;
m 0, 1, 2 oder 3, bevorzugt 0;
n 0, 1, 2 oder 3, bevorzugt 1;
---- die gestrichelte Bindung bedeutet, dass an dieser Position eine Einfachbindung oder eine Doppelbindung vorliegt, bevorzugt liegt eine Doppelbindung vor;
oder
X₂MHal₆ · x H₂O (C)
worin bedeuten:
X Alkalimetall, bevorzugt ausgewählt aus Na, Li und K; oder NH₄
M Übergangsmetall, bevorzugt ausgewählt aus Pd, Pt, Ni, Os und Ir;
Hal Halogen, bevorzugt ausgewählt aus Cl, Br und I;
x 0, 1, 2, 3, 4, 5 oder 6.

2. Verwendung einer Verbindung der Formel B (Miglitol oder allgemeinere Formel) oder von agrochemischen Salzen davon als Mittel zur Bekämpfung von Pilzen oder anderen Mikroorganismen 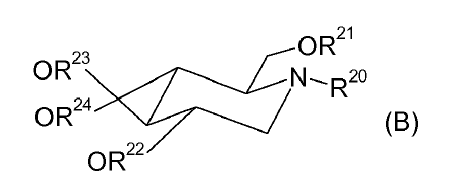 worin bedeuten:
R²¹, R²², R²³, R²⁴ unabhängig voneinander H, Alkyl-, Aryl, Alkylaryl- oder Arylalkylsubstituenten, die gegebenenfalls substituiert sein können;
R²⁰ ein Alkyl-, Aryl-, Alkylaryl- oder Arylalkylsubstituent, der gegebenenfalls substituiert ist.

3. Verwendung nach Anspruch 1 zur Bekämpfung von Pilzen oder anderen Mikroorganismen in oder auf Pflanzen und/oder Saatgut.

4. Verwendung nach Anspruch 2 zur Bekämpfung von Pilzen oder anderen Mikroorganismen in oder auf Pflanzen.

5. Verfahren nach irgendeinem der Ansprüche 1 bis 4, wobei die Pilze und/oder Mikroorganismen phytopathogen sind.

6. Verwendung nach irgendeinem der Ansprüche 1 oder 2 im Materialschutz, insbesondere als Holzschutzmittel.

7. Verwendung nach irgendeinem der Ansprüche 1 bis 6, wobei die Verbindung oder das agrochemische Salz davon in Kombination mit einem weiteren Wirkstoff ausgewählt aus der Gruppe bestehend aus Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals verwendet wird.

8. Mittel zur Bekämpfung von Pilzen oder anderen Mikroorganismen in oder auf Pflanzen, Saatgut und/oder Material, insbesondere Holz, enthaltend mindestens eine der Verbindungen gemäß Anspruch 1 und agrochemisch oder im Materialschutz übliche Hilfs- und/ oder Zusatzstoffe.

9. Mittel zur Bekämpfung von Pilzen oder anderen Mikroorganismen in oder auf Pflanzen und/oder Material, insbesondere Holz, enthaltend mindestens eine der Verbindungen gemäß Anspruch 2 und agrochemisch oder im Materialschutz übliche Hilfs- und/ oder Zusatzstoffe.

10. Mittel nach irgendeinem der Ansprüche 8 oder 9, enthaltend ferner mindestens einen weiteren Wirkstoff ausgewählt aus der Gruppe bestehend aus Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals.

11. Verwendung oder Mittel nach irgendeinem der Ansprüche 1 bis 10, wobei die Pilze ausgewählt sind aus der Gruppe bestehend aus *Blumeria graminis, Phakopsora pachyrhizi, Phytophthora infestans, Pythium ultimum, Magnaporthe grisea, Venturia inaequalis, Fusarium oxysporum, Rhizoctonia solani, Gibberella zeae, Sclerotinia sclerotiorum, Botrytis cinerea, Alternaria solani, Puccinia graminis, Colletotrichum graminicola* und *Mycosphaerella graminicola.*

12. Saatgut, behandelt mit mindestens einer Verbindung gemäß Anspruch 1.

13. Saatgut nach Anspruch 12, zusätzlich behandelt mit einem weiteren Wirkstoff ausgewählt aus der Gruppe bestehend aus Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals.

14. Verfahren zum Screenen nach Pilz- oder Mikroorganismen-Befall inhibierenden Substanzen, umfassend die folgenden Schritte:
a) Bereitstellen einer Kandidatensubstanz" die in der Lage ist, ein Enzym zu inhibieren, das an dem Eindringen oder Ausbreiten des Pilzes oder des Mikroorganismus in die Pflanze beteiligt ist, und
b) Bestimmen, ob die Substanz in der Lage ist, Pilz- oder Mikroorganismus-Befall von Pflanzen zu inhibieren.

15. Verfahren nach Anspruch 14, bei dem Schritt a) den zusätzlich Schritt des Bestimmens, ob die Kandidatensubstanz in der Lage ist, ein Enzym zu inhibieren, das an dem Eindringen oder Ausbreiten des Pilzes oder des Mikroorganismuses in die Pflanze beteiligt ist, umfasst.
